# EUROPÄISCHE PATENTSCHRIFT

(11) **EP 4 213 440 B1**
(45) Veröffentlichungstag und Bekanntmachung des Hinweises auf die Patenterteilung: **30.10.2024**
(21) Anmeldenummer: 22151169.4
(22) Anmeldetag: 12.01.2022
(51) Int. Cl.: H04L 9/08, H04L 9/40

(54) **NUTZUNG QUANTENSICHERER SCHLÜSSEL IN EINEM NETZWERK**
USE OF QUANTUM SECURE KEY IN A NETWORK
UTILISATION D'UNE CLÉ QUANTIQUE SÛRE DANS UN RÉSEAU

(43) Veröffentlichungstag der Anmeldung: 19.07.2023
(73) Patentinhaber: Deutsche Telekom AG, 53113 Bonn (DE)
(72) Erfinder: GEITZ, Marc, 58089 Hagen (DE); BRAUN, Ralf-Peter, 12305 Berlin (DE); HOLSCHKE, Oliver, 10969 Berlin (DE)
(74) Vertreter: Nern, Peter-Michael

(56) Entgegenhaltungen:
- EP-A1- 3 754 896
- DE-B4- 102020 109 246
- US-A1- 2020 403 787
- "Chapter 12: Key Establishment Protocols ED - Menezes A J; Van Oorschot P C; Vanstone S A", 1 October 1996 (1996-10-01), XP001525012, ISBN: 978-0-8493-8523-0, Retrieved from the Internet <URL:http://www.cacr.math.uwaterloo.ca/hac/>

## Beschreibung

Die Erfindung betrifft eine technische Lösung zur Nutzung quantensicherer Schlüssel in einem Netzwerk, welche es insbesondere ermöglicht, solche quantensicheren Schlüssel für eine umfangreiche Nutzung zur Absicherung der Kommunikation in einem Netzwerk breit verfügbar zu machen. Die nachfolgend vorgestellte Lösung bezieht sich insoweit auf eine besondere Art der Erzeugung quantensicherer Schlüssel, welche deren Nutzung auch einer Vielzahl von selbst nicht mit quantenmechanischen Mitteln ausgestatteten Netzelementen ermöglicht, sowie auf eine spezielle Art der Verteilung dazu verarbeiteter Zufallszahlen hoher Entropie. Gegenstände der Erfindung sind ein entsprechendes Verfahren und ein zur Durchführung dieses Verfahrens als Bestandteil des Netzwerks ausgebildetes System.

Der Absicherung der Infrastruktur öffentlicher Netze und der über diese ausgetauschten Daten gegen potenzielle Angriffe und Manipulationen kommt eine auch weiterhin stark steigende Bedeutung zu. Ein wesentlicher Teil dieser Absicherung geschieht durch die Verschlüsselung der als Teil der Infrastruktur von Netzwerken anzusehenden, die Kommunikation und die Datenverkehre managenden Steuerdaten und der über die Netzwerke übertragenen Nutzdaten der Kommunikationsteilnehmer. Für die Verschlüsselung entsprechender Daten ist eine Vielzahl von Verschlüsselungsmechanismen bekannt geworden, welche sich im Wesentlichen in die Kategorien asymmetrische Verschlüsselung und symmetrische Verschlüsselung unterteilen lassen.

Bei der asymmetrischen Verschlüsselung wird für die Verschlüsselung der Daten ein allen dazu berechtigten Kommunikationsteilnehmern bekannter öffentlicher Schlüssel verwendet, wohingegen zur späteren Entschlüsselung der solchermaßen verschlüsselten Daten ein privater Schlüssel eines die mit seinem öffentlichen Schlüssel verschlüsselten Daten empfangenden Teilnehmers, respektive einer Einrichtung, verwendet wird, welcher dort zuvor als Teil eines diesen öffentlichen und den privaten Schlüssel umfassenden Schlüsselpaares erzeugt wurde.

Deutlich sicherer als die asymmetrische Verschlüsselung sind symmetrische Verschlüsselungsverfahren, bei denen für die Verschlüsselung der Daten und für deren spätere Entschlüsselung jeweils derselbe geheime Schlüssel verwendet wird. Ein Problem der symmetrischen Verschlüsselung ist es jedoch, den vorgenannten geheimen Schlüssel an die zu seiner Benutzung berechtigten Einheiten und/oder Teilnehmer zu verteilen, ohne dass hierbei der geheime Schlüssel in die Hände unbefugter, respektive potenzieller Angreifer gelangt.

Neue Möglichkeiten für die Verteilung zur symmetrischen Verschlüsselung verwendbarer geheimer Schlüssel bietet insoweit die Quantenkryptografie. Diese macht es möglich, Schlüssel mit sehr hoher Entropie, das heißt tatsächlich zufälliger Art, zu generieren und diese angriffssicher an mehrere Teilnehmer und/oder Einrichtungen zu verteilen. Hierbei ermöglichen es Verfahren der Quantum Key Distribution (QKD) entsprechende Schlüssel hoher Entropie an zumindest zwei voneinander entfernten Orten gewissermaßen gleichzeitig bereitzustellen, und zwar in der Weise, dass jeder Versuch eines Angriffs auf derartige Schlüssel unmittelbar erkannt wird, also nicht verdeckt bleiben kann. Hierfür bedarf es jedoch eines Quantenkanals, das heißt eines Kanals zur Übertragung quantenmechanischer Zustände, zwischen den beteiligten Teilnehmern, respektive deren die Schlüssel verwendenden Einrichtungen.

Allerdings resultiert aus den für die Anwendung des QKD-Prinzips bestehenden Erfordernissen eine Reihe von Nachteilen für diese Technologie. So sind Systeme und Einrichtungen für den Einsatz der QKD-Technologie sehr teuer. Darüber hinaus ist die Reichweite der erforderlichen Quantenkanäle, jedenfalls soweit diese physisch durch typischerweise dafür in den Netzwerken verwendete, optische Quantenzustände übertragende Glasfasern realisiert werden, sehr begrenzt. Die mögliche Reichweite beträgt hierbei typischerweise zirka 100 km, allenfalls wenige 100 km, jedoch nach derzeitigem Stand nicht 1000 km oder mehr.

Dies resultiert aus der Dämpfung, welche die über die Quantenkanäle (Lichtleitfasern) übertragenen quantenmechanischen Zustände unterworfen sind. Auf der anderen Seite ist prinzipbedingt ein Einsatz von Verstärkern innerhalb der Quantenkanäle nicht möglich, da die Verstärkung entsprechender quantenmechanische Zustände transportierender Signale deren Auslesen erforderlich macht, was unmittelbar zu einer Zerstörung dieser quantenmechanischen Zustände führen würde. Ferner ist das Prinzip der QKD zur Schlüsselerzeugung und -Verteilung in Mobilfunknetzen nicht einsetzbar.

Aus den vorgenannten Gründen, das heißt insbesondere wegen der hohen Kosten, ist davon auszugehen, dass die Nutzung von QKD-Verfahren und der dafür erforderlichen Technik im Wesentlichen zumindest vorerst auf die Infrastruktur der Kernnetze oder auf Punkt-zu-Punkt Verbindungen mit besonderen Sicherheitsanforderungen (beispielsweise Bank-Server-Verbindungen, medizinische Dienst-Verbindungen, Polizei-Datenbank-Verbindungen und ähnliches) beschränkt bleiben wird. Demnach werden in absehbarer Zeit Netzelemente in den Zugangsnetzen wohl allenfalls ausnahmsweise und andere Netzelemente, nämlich zum Beispiel Netzzugangsgeräte, wie Integrated Access Devices IAD, sowie Endgeräte oder Mobilfunkendeinrichtungen, insbesondere auch mobile Endgeräte, wie Smartphones oder Tablett-PCs, wohl nicht unmittelbar von der QKD-Technik profitieren.

Dennoch besteht auch in Verbindung mit der Nutzung dieser Netzelemente ein dringender Bedarf an einer sicheren, respektive quantensicheren Datenübertragung. Dies gilt, zumal Industriegüter oder hochwertige Konsumgüter in denen Mobilfunkendeinrichtungen beispielsweise im Rahmen der Car-to-Car- oder Car-2-X-Kommunikation, der Industrie 4.0 oder des IoT (Internet of Things) zum Einsatz gelangen häufig über lange Zeiträume genutzt werden, so dass diese vorzugsweise bereits jetzt dazu ertüchtigt werden sollten, auch einem Angriff mit Quantencomputern auf von ihnen versendete oder empfange Daten, das heißt Nutz- oder Steuerdaten, widerstehen zu können.

Eine Möglichkeit hierfür besteht dabei darin, die Schlüssel mit Hilfe einer über quantenmechanische Mittel verfügenden Einrichtung, wie beispielsweise eines Quantum Random Number Generator (QRNG), zu erzeugen und diese Schlüssel unter Einsatz ebenfalls als sehr sicher anzusehender Verschlüsselungsverfahren wie der Post Quantum Cryptography, beispielsweise nach dem Prinzip der Key-Encapsulation, an die sie für den späteren Einsatz benötigenden Netzelemente zu übermitteln.

Jedoch besteht hierbei dennoch das Risiko, dass ein entsprechender quantensicherer Schlüssel bei seiner über ein Netzwerk erfolgenden Übermittlung an ein für seinen Empfang bestimmtes Netzelement abgefangen werden könnte. Die Folge wäre, dass eine später unter Verwendung dieses Schlüssels erfolgende verschlüsselte Kommunikation, der verschlüsselte Austausch die Netzinfrastruktur betreffender Steuerdaten oder die sonstige, unter Verwendung solcher Schlüssel erfolgende Absicherung von Verbindungen, auch nicht mehr sicher ist, wobei dies möglicherweise zudem durch die berechtigten Teilnehmer oder durch die Betreiber entsprechender Infrastruktur zunächst längere Zeit gar nicht bemerkt wird.

Darüber hinaus könnte die Verschlüsselung der Kommunikation unter Nutzung der PQC anstelle des Einsatzes quantensicherer Schlüssel möglicherweise eine Alternative darstellen. Bei der PQC handelt sich um eine Gruppe insoweit als klassisch anzusehender Kryptographie-Verfahren, als diese Verfahren nicht auf der Nutzung quantenmechanischer Effekte beruhen. Es handelt sich vielmehr um Verfahren, die auf komplexen mathematischen Problemen beruhen, für die angenommen wird, dass sie auch rechentechnischen Fähigkeiten von Quantencomputern widerstehen können. Während die zumindest theoretisch bestehende absolute Sicherheit gegenüber Angriffsversuchen für QKD-Verfahren bewiesen ist, gilt dies jedoch für PQC-Verfahren nicht. Sie basieren lediglich auf der Annahme, dass sie auch mittels Quantencomputern nicht auszuhebeln sind, wobei aber ein Gegenbeweis tatsächlich bisher nicht erbracht werden konnte. Für besonders sensible Bereiche wird man daher dennoch, trotz der damit verbundenen Kosten, künftig auf den Einsatz von quantensicheren Schlüsseln setzen.

Aufgabe der Erfindung ist es, quantensichere Schlüssel in einem Netzwerk breit verfügbar zu machen und hierbei deren Verwendung auch Netzelementen zu ermöglichen, die selbst nicht über quantenmechanische Mittel verfügen. Hierzu sind ein geeignetes Verfahren anzugeben und ein zur Durchführung dieses Verfahrens ausgebildetes System bereitzustellen.

Die Aufgabe wird durch ein Verfahren mit den Merkmalen des Patentanspruchs 1 gelöst. Ein die Aufgabe lösendes System wird durch den unabhängigen Sachanspruch charakterisiert. Vorteilhafte Aus- und Weiterbildungen der Erfindung sind durch die jeweiligen Unteransprüche gegeben.

Entsprechend dem zur Lösung der Aufgabe vorgeschlagenen Verfahren zur Nutzung quantensicherer Schlüssel in einem Netzwerk wird ein jeweiliger, von mindestens zwei, selbst nicht über quantenmechanische Mittel verfügenden Netzelementen zur Absicherung ihrer über das Netzwerk erfolgenden Kommunikation verwendeter quantensicherer Schlüssel durch die vorgenannten mindestens zwei Netzelemente jeweils lokal, das heißt lokal in jedem dieser Netzelemente, erzeugt. Dies geschieht, indem diese Netzelemente zur Erzeugung eines quantensicheren Schlüssels eine durch sie über das Netzwerk bezogene identische Zufallszahl mit einer, aufgrund des Einsatzes quantenmechanischer Mittel, hinsichtlich ihrer Zufälligkeit hohen Entropie unter Verwendung eines zuvor bei den mindestens zwei Netzelementen, zum Beispiel aufgrund Austausches oder herstellerseitiger oder seitens eines Bereitstellers der Netzelemente erfolgender Implementierung, als gemeinsames Geheimnis hinterlegten Pre-Shared Secret entsprechend einer durch sie identisch angewendeten Prozessierungsvorschrift verarbeiten. Zu den hierfür infrage kommenden Prozessierungsvorschriften (im Weiteren auch KDF = Key Derivation Function) sollten genauere Ausführungen später erfolgen.

Im Hinblick auf die bereits angesprochene Nutzung der lokal erzeugten quantensicheren Schlüssel zur Absicherung der Kommunikation zwischen den diese Schlüssel erzeugenden Netzelementen bezieht sich die Verwendung der quantensicheren Schlüssel insbesondere auf die Absicherung eines von Netzelementen des Netzwerks für einen Datenaustausch genutzten Übertragungsweges und/oder auf die symmetrische Verschlüsselung zwischen den Netzelementen ausgetauschter Daten.

Zufallszahlen hoher Entropie, welche zur lokalen Erzeugung quantensicherer Schlüssel verwendbar sind, können originär durch eine oder mehrere zentral in dem Netzwerk angeordnete Entropiequellen generiert und zur Verfügung gestellt werden. Hierbei könnte eine solche Entropiequelle die von ihr mit Hilfe quantenmechanischer Mittel generierten Zufallszahlen grundsätzlich auch direkt an die sie zur Ableitung quantensicherer Schlüssel auf lokaler Ebene nutzenden Netzelemente übertragen. Sofern aber eine breite Verfügbarkeit der Zufallszahlen zu ihrer umfangreichen Nutzung durch eine Vielzahl hieraus quantensichere Schlüssel erzeugender Netzelemente in einem großen Netzwerk ermöglicht werden soll, erscheint insbesondere auch im Hinblick auf eine gute Skalierbarkeit, ein hierarchischer Ansatz zur Verteilung der Zufallszahlen, wie er nachfolgend beschrieben wird, deutlich leistungsfähiger.

Gemäß dem hier vorgeschlagenen Verfahren wird durch mindestens eine Zufallszahlen hoher Entropie mit Hilfe quantenmechanischer Mittel generierende Entropiequelle der obersten Ebene einer in dem Netzwerk zur Ausführung des Verfahrens ausgebildeten hierarchischen Struktur ein aus generierten Zufallszahlen und aus jeweils eine dieser Zufallszahlen bezeichnenden Identifikatoren gebildeter Stream an mindestens einen diesen Entropie-Stream vervielfältigenden, nämlich an mehrere Netzelemente einer untergeordneten Strukturebene weiterleitenden Stream-Vervielfältiger ausgesendet. Demnach wird einem jeweiligen der mindestens zwei Schlüssel aus Zufallszahlen auf lokaler Ebene erzeugenden Netzelemente, welche gleichzeitig die unterste Strukturebene der hierarchischen Struktur ausbildenden, mindestens ein Stream aus Zufallszahlen und Identifikatoren (im weiteren synonym auch als Entropie-Stream bezeichnet) über eine oder mehrere den betreffenden Netzelementen unterhalb der obersten Strukturebene übergeordnete, jeweils mindestens einen Stream-Vervielfältiger umfassende Strukturebenen der hierarchischen Struktur zugeführt.

Das Verfahren ist hierbei vorzugsweise so gestaltet, dass sich zumindest alle oberhalb der untersten Strukturebene bei der Übertragung von Streams aus Zufallszahlen und zugehörigen Identifikatoren miteinander kommunizierenden Einheiten untereinander authentifizieren. Insbesondere authentifiziert sich die mindestens eine, respektive jede von gegebenenfalls, das heißt vorzugsweise mehreren Entropiequellen gegenüber dem oder den Stream-Vervielfältiger(n) unmittelbar unterhalb der obersten Strukturebene an den/die Entropiequelle einen Entropie-Stream aussendet. Je nach den für den Empfang eines bestimmten Entropie-Streams für die ihn empfangenden und aus den enthaltenen Zufallszahlen lokal quantensichere Schlüssel erzeugenden Netzelemente der untersten Strukturebene festgelegten Bedingungen/Kriterien kann es aber auch vorgesehenen sein, dass sich alle an dessen Erzeugung und Übertragung beteiligten Einrichtungen und Netzelemente verschiedener Strukturebenen untereinander authentifizieren. Auf dafür mögliche Verfahren soll später noch eingegangen werden.

Im Zusammenhang mit einer möglichen Verfahrensgestaltung und der Vorstellung für die Verteilung von zur lokalen Schlüsselerzeugung dienenden Entropie-Streams mit Zufallszahlen in dem Netzwerk denkbaren Verteilungsprogrammen wird später noch ersichtlich werden, dass der bei einem jeweiligen, Schlüssel auf lokaler Ebene erzeugenden Netzelement eingehende Stream aus Zufallszahlen und Identifikatoren nicht identisch sein muss mit einem durch (die mindestens eine oder eine einzelne) Entropiequelle erzeugten Stream aus Zufallszahlen und Identifikatoren. Hinsichtlich der vorgenannten Verteilungsprogramme wird nachfolgend synonym von Streaming-Programmen oder Entropie-Programmen (es wird gewissermaßen Entropie verteilt, in Form von Entropie-Streams mit Zufallszahlen hoher, hinsichtlich der erzeugten Schlüssel zur Quantensicherheit führender Entropie) gesprochen.

In Bezug auf die vorstehend angesprochenen Verteilungsprogramme, denen zufolge unterschiedliche Entropie-Streams, nämlich insbesondere im Hinblick auf die Art ihrer Zugänglichkeit unterschiedliche Entropie-Streams an Netzelemente der untersten Strukturebene zum Zweck der dortigen lokalen Schlüsselerzeugung verteilt werden können, soll an dieser Stelle zunächst auf Folgendes hingewiesen werden. Aus Zufallszahlen eines welchen, von gegebenenfalls mehreren empfangenen Entropie-Streams ein erstes Netzelement gemeinsam mit mindestens einem zweiten Netzelement quantensichere Schlüssel zur Absicherung der zwischen ihnen über das Netzwerk erfolgenden Kommunikation erzeugt, ist abhängig von einem sowohl für das erste Netzelement als auch für das jeweilige zweite Netzelement bestehenden freien oder an eine Authentifizierung gebundenen Zugangs zu mindestens einem Stream-Vervielfältiger der hierarchischen Struktur und von mindestens einem bei dem ersten Netzelement sowie bei jeweils mindestens einem der zweiten Netzelemente hinterlegten gemeinsamen Pre-shared Secret.

Insoweit liegt es sicherlich unmittelbar auf der Hand, dass ein jeweiliges Netzelement nur aus Zufallszahlen von Entropie-Streams quantensichere Schlüssel erzeugen kann, welche durch das betreffende Netzelement auch über einen ihm zugänglichen Stream-Vervielfältiger empfangen werden. Andererseits nutzt es einem ersten Netzelement nichts, wenn es zwar einen Stream empfangen und eine Zufallszahl aus diesem Stream unter Verwendung eines bei ihm hinterlegten Pre-shared Secret in einen Schlüssel überführen kann, wenn es aber nicht mindestens ein zweites Netzelement gibt, welches sowohl denselben Entropie-Stream empfangen kann als auch über dasselbe Pre-shared Secret verfügt wie das vorgenannte erste Netzelement. Im letztgenannten Fall könnten die Netzelemente keine gemeinsamen quantensicheren Schlüssel erzeugen, so dass also die Möglichkeit der Erzeugung gemeinsamer Schlüssel auch vom Vorliegen desselben Pre-shared Secret bei den Netzelemente abhängig ist.

Was die Art eines Entropie-Streams, aus dessen Zufallszahlen ein erstes Netzelement gemeinsam mit einem anderen Netzelement quantensichere Schlüssel erzeugen kann, sowie dessen Verteilung in den Netzwerk anbelangt, so kann es sich dabei beispielsweise um einen Entropie-Stream mindestens einer der nachfolgenden Kategorien handeln, nämlich um einen reinen Entropie-Stream, um einen vermischten Entropie-Stream, um einen geschlossenen Entropie-Stream, um einen offenen Entropie-Stream, um einen weltweit verfügbaren Entropie-Stream, um einen national verfügbaren Entropie-Stream, um einen regional verfügbaren Entropie-Stream. Im Hinblick auf die Verteilung der vorgenannten unterschiedlichen Entropie-Streams soll in diesem Zusammenhang auch von unterschiedlichen Verteilungsprogrammen, respektive - synonym - von unterschiedlichen Programmen, nämlich Streaming-Programmen oder Entropie-Programmen, gesprochen und später auf deren Einzelheiten eingegangen werden. Ein jeweiliger Entropie-Stream kann auch gleichzeitig mehreren der vorgenannten Kategorien angehören.

Bei der bereits wiederholt angesprochenen Prozessierungsvorschrift (KDF), gemäß welcher die mindestens zwei Netzelemente aus einer jeweiligen Zufallszahl unter Verwendung des zwischen ihnen ausgetauschten Pre-Shared Secret einen jeweiligen quantensicheren Schlüssel berechnen, kann es sich beispielsweise um eine bitweise XOR-Verknüpfung zwischen der Zufallszahl und dem Pre-Shared Secret handeln.

Im Hinblick auf die einer bitweisen XOR-Verknüpfung anhaftenden Probleme (beispielsweise bei der Verknüpfung zweier identischer Zahlen oder von zwei Bitfolgen, bei denen alle einzelnen Bits einer der Bitfolgen invers zu den einzelnen Bits der anderen Bitfolge sind) und auf die relative Einfachheit dieser Operation, sollte indessen zu weiteren Erhöhung der Sicherheit als Prozessierungsvorschrift zur Verrechnung der Zufallszahl hoher Entropie mit dem Pre-shared Secret vorzugsweise eine durch das NIST (National Institute of Standards and Technology) standardisierte Key Derivation Function (KDF) verwendet werden.

Möglich ist es insoweit zum Beispiel, die jeweilige Zufallszahl nach einem Verschlüsselungsalgorithmus, wie beispielsweise dem Advanced Encryption Standard (AES), mit dem Pre-Shared Secret zu verrechnen. Hierbei wird zum Beispiel die jeweilige Zufallszahl als Schlüssel auf das Pre-Shared Secret angewendet, wobei das unter Anwendung der Blockchiffre entstehende Chiffrat dann den gemeinsamen quantensicheren Schlüssel ausbildet, welcher später zu Absicherung ihrer Kommunikation von den mindestens zwei Netzelementen genutzt werden kann.

Mit einem AES Schlüssel lassen sich 1 TBit an Zufallszahlen sicher in Anwendungsschlüssel konvertieren. Bei der Anwendung der auf diese Weise erzeugten quantensicheren Schlüssel zu Verschlüsselung von Nutzdaten, respektive der Kommunikation zwischen zwei gemeinsame Schlüssel erzeugenden Netzelementen lassen sich wiederum 1 TBit Netzwerkverkehr sicher mittels AES verschlüsseln. Bei Core-Netzen, respektive Kernnetzen, von 1 TBit Bandbreite muss der AES Schlüssel somit einmal pro Sekunde gewechselt werden. Das heißt, unter Einsatz des erfindungsgemäßen Verfahren muss zur Absicherung der Kommunikation mindestens zweier Netzelemente ein Schlüssel pro Sekunde erzeugt werden, was gleichzeitig der erforderlichen Geschwindigkeit des diesen mindestens zwei Netzelementen zur Erzeugung der quantensicheren Schlüssel zur Verfügung gestellten Entropie-Streams entspricht. Bei dieser Geschwindigkeit ist es möglich, mit einem 256 Bit Pre-Shared Secret 10^12 Zufallszahlenbits, das heißt 4 * 10^10 (256 bit) Zufallszahlenblöcke zu verschlüsseln. Ein Jahr hat etwa 3 * 10^7 Sekunden, so dass mittels eines Pre-Shared Secret für etwa 1000 Jahre aus 256 Bit Zufallszahlen sicher 256 Bit AES Anwendungsschlüssel (gemeinsame Schlüssel mindestens zweier Netzelemente zur Verschlüsselung ihrer Kommunikation) berechnet werden können. Das bedeutet wiederum, dass das vorgeschlagene Verfahren als wartungsfrei betrachtet werden kann - eine einmalige Verteilung eines 256 Bit Pre-Shared Secret ist für mindestens 1000 Jahre ausreichend.

Unabhängig von der zur lokalen Schlüsselerzeugung aus den Zufallszahlen jeweils genutzten KDF speichern die Netzelemente jeden in der zuvor beschriebenen Art erzeugten Schlüssel in Zuordnung zu dem mit der dafür verwendeten Zufallszahl mit dem Stream erhaltenen Identifikator zur späteren Nutzung in einem Hardware Sicherheitsmodul (HSM = Hardware Security Module) oder verschlüsselt in einem Hauptspeicher des jeweiligen Netzelements (Gerätes).

Für die zuvor angesprochene Authentifizierung zumindest der Einheiten oberhalb der untersten Strukturebene kann zum Beispiel ein Signaturverfahren der PQC, also der Post Quantum Cryptography, verwendet werden. Darüber hinaus ist auch eine Verwendung von PQC-Zertifikaten für die Authentifizierung möglich. Im Zusammenhang mit der Weiterleitung eines Entropie-Streams an Zufallszahlen dieses Streams zur Erzeugung von (gemeinsamen) quantensicheren Schlüsseln nutzende Netzelemente kann sich die Authentifizierung zwischen einer Entropiequelle der obersten Strukturebene und einem Stream-Vervielfältiger unmittelbar unterhalb der obersten Strukturebene zum Beispiel wie folgt vollziehen. Per entsprechendem Protokoll fordert der Stream-Vervielfältiger die mit ihm verbundene Entropiequelle dazu auf, ihm die SHA256 Summe des PQC-Schlüssels mit der ID X zuzusenden. Die Entropiequelle übermittelt die SHA256 Summe des entsprechenden PQC-Schlüssels an den sie anfordernden Stream-Vervielfältiger. Der Stream-Vervielfältiger überprüft die Summe und authentifiziert so die Entropiequelle.

Entsprechend einer möglichen Ausgestaltung des Verfahrens ist es vorgesehen, dass einem Stream-Vervielfältiger von den Einrichtungen der nächsthöheren Strukturebene (übergeordnete Stream-Vervielfältiger oder Entropiequellen) auch zwei oder mehr Streams aus Zufallszahlen und zugehörigen Identifikatoren zur Verteilung zugeführt werden können. Zur Erhöhung der Sicherheit der Übertragung wird in diesem Falle vorgeschlagen, dass ein solcher Stream-Vervielfältiger die mindestens zwei bei ihm eingehenden Streams vor ihrer Vervielfältigung und Weiterleitung an die ihm untergeordnete Strukturebene miteinander verknüpft. Auch dies geschieht beispielsweise durch eine bitweise XOR-Verknüpfung der betreffenden Streams oder durch Anwendung einer anderen Key Derivation Function (KDF). Solchermaßen werden also zwei oder mehr Streams aus Zufallszahlen und Identifikatoren bestehende Streams gewissermaßen miteinander vermischt. Hieraus ergibt sich, wie bereits früher angesprochen, der Umstand, dass es sich bei einem Stream aus Zufallszahlen und Identifikatoren, welcher bei einem aus den Zufallszahlen lokal quantensichere Schlüssel erzeugenden Netzelement eingeht, nicht um einen Entropie-Stream handeln muss, wie er in dieser Form ursprünglich durch die mindestens eine Entropiequelle oder durch eine der Entropiequellen der obersten Strukturebene ausgesendet wurde.

Das heißt, seine finale Form hinsichtlich der konkreten in ihm enthaltenen Zufallszahlen erhält ein bei einem Netzelement der untersten Strukturebene eingehende Entropie-Stream unter Umständen erst in einem der Stream-Vervielfältiger, nämlich genau dann, wenn durch den betreffenden Stream-Vervielfältiger nicht nur eine Streamvervielfältigung, sondern auch eine Vermischung mindestens zweier Entropie-Streams erfolgt. Im Zusammenhang mit einer Vermischung von Streams durch bitweise XOR-Verknüpfung kann durch geeignete Maßnahmen - zum Beispiel gleiche Länge der Zufallszahlen in den Streams, keine XOR-Verknüpfung einander identischer Zufallszahlen, was zu einem Nullstring führen würde - sichergestellt werden, dass sich die Entropie der Zufallszahlen nicht verschlechtert. Wie aber bereits ausgeführt, kann die Stream-Verknüpfung aber auch unter Einsatz einer anderen KDF erfolgen, welche jedoch nichts zu tun hat mit der zur lokalen Erzeugung der quantensicheren Schlüssel durch Netzelemente der untersten Strukturebene verwendeten KDF.

Gemäß der zuletzt erläuterten Verfahrensgestaltung einer Vermischung von Streams findet, wie dargestellt, eine Vermischung der von den Streams in Form der Zufallszahlen transportierten Entropie statt. Sofern eine Zuführung mehrerer Streams und deren Vermischung nur bei einigen Stream-Vervielfältigern einer Strukturebene erfolgt, sind die bei den Elementen unterhalb dieser Strukturebene, also bei nachgeordneten Stream-Vervielfältigern oder bei hieraus lokal quantensichere Schlüssel erzeugenden Netzelementen, ankommenden Streams nicht mehr an allen Übergabepunkten identisch. Daher müssen sich bei einer entsprechenden Verfahrensgestaltung die Elemente der untersten Strukturebene, also die lokal quantensichere Schlüssel erzeugenden Netzelemente, neben dem Austausch des Pre-Shared Secret auch über einen von ihnen gemeinsam genutzten Stream (das Programm) verständigen.

Es wird somit im also ein Konzept offeriert, gemäß welchem die Netzelemente zwischen unterschiedlichen Entropie-Streams, also gewissermaßen - wie bereits auch schon früher angesprochen zwischen unterschiedlichen, von ihnen genutzten (Streaming-) Programmen, wählen können. Die einzelnen Programme können hierbei zum Beispiel hinsichtlich der Beschaffenheit der mittels ihrer verteilten Entropie-Streams, wie unter anderem der Datenrate, hinsichtlich ihrer territorialen oder netzbezogenen Abdeckung und Verfügbarkeit sowie hinsichtlich des vorgesehenen Verwendungszwecks der auf Grundlage des oder der verteilten Streams lokal erzeugten Schlüssel unterschieden werden. Insoweit können insbesondere folgende Streaming-Programme, respektive Entropie-Programme, zur freien oder aber auch zur beschränkten Nutzung durch Netzelemente zum Zweck der Schlüsselerzeugung angeboten werden:
- Reine Programme: Diese Programme betreffen die Weiterleitung und Vervielfachung einer reinen Entropiequelle, also der von einer Entropiequelle ausgesendeten Streams mit Zufallszahlen. Die Endpunkte, so insbesondere die Nutzer, respektive deren Netzelemente auf der untersten Strukturebene, können aber durchaus weltweit räumlich verteilt sein. Jeder Nutzer eines reinen Programms erhält dieselben Zufallszahlen an allen Endpunkten des reinen Streams. Ein Beispiel für ein reines Programm wäre ein proprietärer Entropie-Stream eines Mobilfunkanbieters.
- Vermischte Programme: Dies sind Programme, bei denen die Entropie-Streams verschiedener Entropiequellen durch mindestens einen Stream-Vervielfältiger wenigstens einer Strukturebenen zum Beispiel bitweise XOR multipliziert oder unter Anwendung einer anderen KDF miteinander verknüpft werden. Die über vermischte Programme verteilten Zufallszahlen sind nur an wenigen Endpunkten (Netzelementen der untersten Strukturebene) verfügbar, können aber auch räumlich weltweit verteilt werden.
- Geschlossene Programme: Es handelt sich um Programme, die nur von (PQ)-authentifizierten, das heißt von mittels Prinzipien der Post Quantum Cryptography authentifizierten und (PQ)-autorisierten Nutzergruppen verwendet werden können. Geschlossene Programme dienen besonderen Nutzergruppen, wie zum Beispiel der Polizei, der Feuerwehr, Firmen mit besonderen Sicherheitsanforderungen, den Geheimdiensten oder dem Militär. Hat ein geschlossenes Programm eine eigene Entropiequelle, kann dieses auch als unabhängiges geschlossenes Programm bezeichnet werden. Hat das geschlossene Programm keine eigene Entropiequelle, so kann es ein abhängiges geschlossenes Programm betrachtet werden, welches nur in einem Teil der hierarchischen Struktur, nämlich jedenfalls unterhalb der obersten Strukturebene der Entropiequellen abläuft und sich durch das Erfordernis der Authentifizierung als geschlossen darstellt. Das geschlossene Programm kann, unter Einbeziehung mindestens eines hierfür genutzten Stream-Vervielfältigers, sowohl in einem "reinen" oder in einem "vermischten" Modus bedient werden. Geschlossene Programme lassen sich dabei gut in Ihrer Performance steuern, weil die Anzahl der autorisierten Benutzer bekannt ist.
- Offene Programme: Dies sind Programme, die jeden Nutzer akzeptieren. Eine besondere Autorisierung der Nutzer ist nicht notwendig. Die Anfragen der Nutzer, respektive der von ihnen betriebenen, zur lokalen Erzeugung von Schlüsseln ausgebildeten Netzeinrichtungen müssen über ein "load management" gemanagt werden.
- Weltweite Programme: Hierbei handelt es sich um Programme, die durch weltweit verteilte Endpunkte (das heißt Netzelemente auf der untersten Strukturebene) genutzt werden können. In weltweiten Programmen können sich Netzelemente, wie zum Beispiel telekommunikative Endgeräte, mit derselben Entropie, das heißt mit den jeweils selben Zufallszahlen, an räumlich weltweit verteilten Orten versorgen.
- Regionale Programme: Diese Kategorie bezieht sich auf Programme, die regional verteilte Endpunkte (Endpunkte im Sinne der Erläuterungen zu weltweiten Programmen) nutzen. Regionale Programme sind nur innerhalb einer Region verfügbar. Beispiel: Europäische Union, Eifel.
- Nationale Programme: Es handelt sich um Programme, die über national verteilte Endpunkte (nach dem zuvor bei weltweiten und regionalen Programmen angesprochen Verständnis) ausgeführt werden. Nationale Programme sind nur innerhalb eines Landes oder Staates verfügbar. Beispiel: Deutschland.

Aus den vorstehenden Ausführungen wird unmittelbar erkennbar, dass ein Entropie-Stream mehreren der dabei genannten Arten von Streams, respektive von Verteilungsprogrammen zugeordnet werden kann. So ist es sicherlich beispielsweise ohne Weiteres verständlich, dass ein weltweites oder ein nationales Programm gleichzeitig auch ein offenes, oder aber auch ein geschlossenes Programm sein kann. Ein wesentlicher Vorteil der vorgeschlagenen Lösung ist es dabei außerdem, dass jede Organisation, jeder Staat, jede Region einen eigenen Entropiedienst betreiben kann, wobei die betreffenden Dienste alle unabhängig voneinander sind. Die Netzelemente, wie zum Beispiel Telekommunikationsendgeräte können sich dabei einen der Entropiekanäle (Entropie-Stream) zur Versorgung aussuchen und diesen erforderlichenfalls auch ändern (umschalten). Die quantensichere Schlüssel zur gemeinsamen Nutzung erzeugenden Netzelemente (Geräte) müssen sich dazu nur entsprechend abstimmen.

Ein Streaming- oder Entropie-Programm ist hierbei ein dedizierter Strom von unabhängigen Zufallszahlen und zugehörigen Identifikatoren. Ein Entropie-Programm kann mehreren Endpunkten, das heißt durch mehrere quantensichere Schlüssel auf lokaler Ebene erzeugende Netzelemente, empfangen werden, abhängig von der Konfiguration der Stream-Vervielfältiger. Ein Entropie-Programm ist dabei gewissermaßen analog zu einem Fernsehprogramm oder einem Videostream. Unterschiedliche Programme haben demgemäß unterschiedliche Inhalte.

Im Falle einer Umsetzung des Verfahrens in einer nur eine Entropiequelle aufweisenden hierarchischen Struktur und somit unter Verwendung nur eines reinen (Streaming-) Programms gestaltet sich ein Protokoll zur Verwendung durch Netzelemente (zum Beispiel Endgeräte) der untersten Strukturebene bereits aus dem entsprechenden Stream erzeugter quantensicherer Schlüssel durch zwei dieser Netzelemente zu Absicherung des zwischen ihnen erfolgenden Datenverkehrs beispielsweise wie folgt:
(1) Ein Netzelement wählt zufällig einen privaten Anwendungsschlüssel, respektive einen der bei ihm lokal erzeugten und gespeicherten quantensicheren Schlüssel aus dem bei ihm verfügbaren Vorrat solcher Schlüssel aus.
(2) Das Netzelement schickt den Identifikator (ID) des Schlüssels an die Gegenstelle im Netz, also das andere Netzelement.
(3) Die Gegenstelle sucht sich basierend auf der ID den passenden Schlüssel aus seinem Schlüsselspeicher heraus.
(4) Beide Netzelemente nutzen die identischen quantensicheren Schlüssel (privaten Anwendungsschlüssel) zur Verschlüsselung der Verkehre oder Anwendungen.

Das heißt, die beiden Netzwerkelemente erzeugen gemeinsame Schlüssel aus Zufallszahlen ausschließlich desselben, von der nur einen Entropiequelle empfangenen Entropie-Streams und müssen daher sich bei deren Verwendung nicht erst über ein Entropie-Programm verständigen, auf welches diese Schlüssel zurückgehen.

Sofern die hierarchische Struktur, wie für die praktische Umsetzung der Erfindung bevorzugt, mehrere Entropiequellen umfasst und innerhalb dieser Struktur mehrere, das heißt verschiedene Entropie-Programme zur Verteilung der Streams mit Zufallszahlen genutzt werden, müssen sich beide, quantensichere Schlüssel lokal erzeugende und diese dann gemeinsam nutzenden Netzelemente auf ein Entropie-Programm und somit auf den Stream, unter dessen Verwendung die von ihnen zu nutzenden Schlüssel erzeugt wurden, einigen. Dazu wird das Protokoll um einige Schritte am Anfang des Protokolls erweitert.
a. Ein Netzelement schickt einem anderen Netzelement eine Liste von verfügbaren Entropie-Programmen, insbesondere die Programme, die bereits verarbeitet werden.
b. Das andere Netzelement wählt ein oder mehrere Entropie-Programme aus, welches beide Netzelemente empfangen können. Es übermittelt das gewählte Programm oder die gewählten Programme zurück.

Das Protokoll wird dann weiter entsprechend den zuvor angegebenen Schritten (1) bis (4) ausgeführt.

Entsprechend einer besonders vorteilhaften Weiterbildung des Verfahrens wird die Qualität der über die beschriebene hierarchische Struktur verteilten Zufallszahlen, das heißt deren Entropie, überwacht und hierfür wiederholt validiert. Eine entsprechende Validierung und Überwachung der Entropie kann beispielsweise durch die unterhalb der obersten Strukturebene der mindestens einen Entropiequelle angeordneten, dafür entsprechend ausgebildeten Stream-Vervielfältiger erfolgen. Sie kann aber auch durch eine jeweilige Entropiequelle und ihr unmittelbar dafür zuordnete Einheiten selbst erfolgen. Die Validierung der Zufallszahlen, respektive ihrer Entropie, erfolgt hierbei zum Beispiel mittels eines klassischen Computers nach statistischen Verfahren unter Anwendung dazu verfügbarer spezieller statistischer Tools und Algorithmen.

Möglichkeiten der Messung der Entropiequalität werden zum Beispiel angesprochen in Killmann et al., "A proposal for Functionality classes for random number generators", 2011. Gemäß Killmann et al. werden hinsichtlich der Qualität der Entropie unterschiedliche Klassen definiert, wobei die Zufallszahlen im Kontext der hier beschriebenen technischen Lösung vorzugsweise der Klasse PTG.3 zuzuordnen sein sollten. Ist dies der Fall, so wird ein entsprechender Stream, dessen Zufallszahlen die dieser Klasse entsprechenden Erfordernisse erfüllen, durch das die Validierung vornehmende Element, beispielsweise den von einem Stream-Vervielfältiger umfassten klassischen Computer, mit einer dies bestätigenden Signatur versehen. Andernfalls wird vorzugsweise an die den Stream ursprünglich erzeugende Entropiequelle ein entsprechendes Signal übermittelt, welches die betreffende Entropiequelle auswertet und diese dadurch zu entsprechenden Steuermaßnahmen zur Erhöhung der Entropie veranlasst.

Mit Blick auf die zuletzt dargestellte Weiterbildung einer Qualitätssicherung der Entropie der für die lokale Erzeugung der quantensicheren Schlüssel genutzten Zufallszahlen des Streams kann man bei den bereits vorgestellten Programmen zu deren Erzeugung und Verteilung zusätzlich noch zwischen gemanagten Entropie-Programmen und im Grunde für jedermann, verfügbaren Programmen unterscheiden, wobei die letzteren zugrundeliegenden, typischerweise nicht solchermaßen auf Qualität geprüften Streams hier zur sprachlichen Vereinfachung auch als "Community-Streams bezeichnet werden sollen.

Kommerzielle, gemanagte Entropie-Streams könnten sich hierbei von "Community Streams" dadurch absetzen, dass sich ein kommerzieller Entropie-Stream auszeichnet durch:
- eine gemessene und validierte Qualität der Entropie der generierten Zufallszahlen,
- eine Zertifizierung der gesamten Prozesskette,
- eine erhöhte Ausfallsicherheit.

Daher können gemanagte Entropie-Streams ein höheres Level an Vertraulichkeit für sicherheitsrelevante Anwendungen erreichen. Im Falle dessen, dass ein Entropie-Stream durch einen Angreifer korrumpiert wäre, würden die bei den beiden Teilnehmern, respektive Netzelementen, mit deren Pre-shared Secret, erzeugten Schlüssel nicht mehr identisch sein, und eine sichere Verbindung wäre mittels der nach Anwendung der KDF erzeugten Schlüssel nicht mehr möglich. Ein entsprechender Angriff führt zu einer Verbindungsstörung, die sofort bemerkt und dem übergeordneten Management mitgeteilt wird, welches sofort Maßnahmen gegen die Korruption ergreifen kann und muss.

Ein die Aufgabe lösendes und zur Durchführung des zuvor beschriebenen Verfahrens ausgebildetes System zur Nutzung quantensicherer Schlüssel in einem Netzwerk umfasst zunächst mindestens eine Entropiequelle. Diese Entropiequelle generiert Zufallszahlen mit einer, aufgrund des Einsatzes quantenmechanischer Mittel, hinsichtlich ihrer Zufälligkeit hohen Entropie. Sie erzeugt hierbei einen Stream aus solchen Zufallszahlen und zugehörigen jeweils eine dieser Zufallszahlen bezeichnenden Identifikatoren.

Das System umfasst weiterhin mindestens zwei, selbst nicht über quantenmechanische Mittel verfügende Netzelemente, zum Beispiel Endgeräte oder Zugangseinrichtungen zum Internet, welche dennoch quantensichere Schlüssel zur Absicherung ihrer über das Netzwerk erfolgenden Kommunikation verwenden. Die vorgenannten mindestens zwei Netzelemente sind dabei dazu ausgebildet, Zufallszahlen, welche bei ihnen als Stream aus Zufallszahlen und aus jeweils eine dieser Zufallszahlen bezeichnenden Identifikatoren über das Netzwerk eingehen, zur lokalen Erzeugung quantensicherer Schlüssel unter Verwendung eines zuvor zwischen ihnen ausgetauschten Pre-Shared Secret entsprechend einer, das heißt entsprechend derselben, durch die mindestens zwei Netzelemente angewendeten Prozessierungsvorschrift zu verarbeiten.

Zu den insoweit für eine derartige Prozessierungsvorschrift (KDF) bestehenden Möglichkeiten sind Ausführungen bereits im Zusammenhang mit der Erläuterung des Verfahrens gegeben worden.

Die mindestens eine Entropiequelle und die mindestens zwei Netzelemente des zur Lösung der Aufgabe vorgeschlagenen Systems sind dabei Bestandteile einer zur Erzeugung und Verteilung von Zufallszahlen in dem Netzwerk ausgebildeten hierarchischen Struktur. Innerhalb dieser hierarchischen Struktur ist die mindestens eine Entropiequelle Teil der obersten Strukturebene oder bildet diese (sofern in dem Netzwerk nur eine Entropiequelle existiert) aus. Die mindestens zwei aus bei ihnen eingehenden Zufallszahlen lokal quantensichere Schlüssel erzeugenden Netzelemente bilden hingegen die unterste Strukturebene der hierarchischen Struktur aus.

Zwischen der obersten und der untersten Strukturebene der hierarchischen Struktur sind eine oder mehrere weitere Strukturebenen mit jeweils mindestens einem Stream-Vervielfältiger ausgebildet. Über diese Strukturebene oder diese Strukturebenen, also über mindestens einen Stream-Vervielfältiger, werden den mindestens zwei, auf lokaler Ebene quantensichere Schlüssel erzeugenden Netzelementen der untersten Strukturebene Streams aus Zufallszahlen hoher Entropie und aus diesen Zufallszahlen zugeordneten Identifikatoren zur Schlüsselerzeugung zugeleitet. Alle sich oberhalb der untersten Strukturebene der angesprochenen hierarchischen Struktur befindenden Elemente beziehungsweise Einheiten sind vorzugsweise dazu ausgebildet, sich untereinander zu authentifizieren.

Bei der mindestens einen Entropiequelle handelt es sich beispielsweise um einen Quantum Random Number Generator (QRNG) oder um einen Quantencomputer. Vorzugsweise ist der betreffende QRNG oder Quantencomputer Bestandteil eines durch die Einheiten in der sich darunter befindlichen Strukturebene ansprechbaren Serverdienstes. Der betreffende Serverdienst kann hierbei in eine Cloud-Infrastruktur eingebettet sein.

Typischerweise ist das System so ausgelegt, dass die die Zufallszahlen zur Schlüsselerzeugung nutzenden und diese dazu über die, respektive den mindestens einen Stream-Vervielfältiger beziehenden Netzelemente im Grunde freien Zugriff auf die sich unmittelbar oberhalb ihrer Strukturebene befindenden Stream-Vervielfältiger haben. Für spezielle Verfahrensgestaltungen (also im Rahmen der Realisierung unterschiedlicher Streaming-Programme) kann es aber vorgesehen sein, dass sich Netzelemente der untersten Strukturebene auch gegenüber den direkt mit ihnen kommunizierenden Stream-Vervielfältiger zunächst authentifizieren müssen, um von diesen Streams mit Zufallszahlen zu beziehen. Demgemäß können auch diese Netzelemente hierfür entsprechend ausgebildet sein.

Bei den Netzelementen, welche auf lokaler Ebene quantensichere Schlüssel durch Prozessierung bei ihnen in Form von Streams eingehender Zufallszahlen erzeugen, kann es sich beispielsweise um Telekommunikationsendgeräte, wie zwei, in verschiedenen lokalen Netzwerken angeordnete Computer handeln, welche über das Netzwerk (Weitverkehrsnetz, Internet) Daten symmetrisch verschlüsselt miteinander austauschen. Bei einem solchen, zur Durchführung des Verfahrens zumindest zur Erzeugung von quantensicheren Schlüsseln durch entsprechende Prozessierung eingehender Zufallszahlen ausgebildeten Endgerät kann es sich aber auch um ein Gerät für die mobile Nutzung handeln, welches mit einem Subscriber Identity Module (SIM) ausgestattet ist, beispielsweise um eine IoT-Einrichtung. Das betreffende Telekommunikationsendgerät und sein SIM sind dabei dazu ausgebildet, mindestens ein für die lokale Erzeugung quantensicherer Schlüssel verwendetes Pre-Shared Secret in dem SIM (oder als Bestandteil eines eSIM = embedded SIM) abzulegen.

Darüber hinaus kann es sich bei den zur Durchführung des Verfahrens, das heißt zur Erzeugung quantensicherer Schlüssel auf lokaler Ebene ausgebildeten Netzelementen, aber beispielsweise auch um ein Integrated Access Device (IAD) sowie um einen als Peering Point ausgebildeten Netzwerkknoten handeln, über welchen das vorgenannte IAD und die an diesem betriebenen Endgeräte unter Ausbildung eines mittels der erzeugten quantensicheren Schlüssel geschützten VPN-Tunnels an das Netzwerk angekoppelt sind. Bei einem entsprechenden Netzelement kann es sich aber auch um eine Basisstation eines Mobilfunknetzes handeln.

Die vorgeschlagene, zuvor vorgestellte Lösung weist eine Reihe von Vorteilen auf. Als Verfahren zur weltweiten Entropieverteilung zur Erzeugung von gemeinsamem Zufall zur Absicherung von Kommunikation ist sie mit Quantenzufallszahlengeneratoren sowie unter Einbeziehung von PQC-Verschlüsselung und PQC-Authentifizierung realisierbar. Die Architektur des Systems ist skalierbar, nämlich bis zu weltweit skalierbar, sowie modular implementierbar.

Eine Nutzung als Community-Plattform oder als kommerzielles Produkt mit entsprechendem "Quality of Service" ist möglich. Die Integration in bestehende Netzwerkarchitekturen, Cloud-Architekturen, Edge-Cloud-Architekturen ist transparent, kostengünstig und minimal invasiv. Die Lösung ist ferner netzagnostisch, das heißt sie funktioniert sowohl in leitungsgebundenen Glasfasernetzen oder Kupfernetzen als auch in Funknetzen, wie zum Beispiel Mobilfunknetzen. Sie ist außerdem kostengünstig und massenmarkttauglich.

Die Erweiterbarkeit zur Absicherung aller Telematik-Lösungen im Verkehr, Büros, Transportwesen, Fabriken, Logistikwesen und zur Absicherung des Internet oft hings (IoT) sowie der Kommunikation im Rahmen der Industrie 4.0 und anderem ist gegeben.

Das dargestellte Verfahren verteilt quantensichere private Anwendungsschlüssel, über öffentliche Netzwerkumgebungen, ohne geheime Schlüssel auszutauschen. Der Schlüssel, der die Netzwerkverkehre schützt, wird lokal im Endgerät und an der Gegenstelle im Netzwerk, in Servern, Routern oder anderen mobilen Endgeräte erzeugt, verarbeitet und gespeichert. Er wird nicht mehr durch ungesicherte Netze transferiert. Aus diesem Grund sind Technologien, wie Quantenschlüsselaustausch, nicht mehr notwendig. Die Qualität der zentral, durch QRNGs/Quantencomputer erzeugten Zufallszahlen, lässt sich vor dem Versand überprüfen und bei Bedarf verbessern.

Die vorgestellte technische Lösung schützt die Netzwerkverkehre, sofern sichergestellt wird, dass
- der Entropie-Stream von einer authentifizierten Quelle stammt.
- der Entropie-Stream unveränderlich ist.
- die vorab verteilten Shared Secrets (Pre-shared Secrets) und die lokal berechneten privaten Anwendungsschlüssel sicher verwahrt und vor Zugriffen Dritter manipulationssicher gespeichert werden.
- die Verteilung des Pre-shared Secret manipulationssicher (bespielsweise durch Dongles und mehrere Faktoren) erfolgt.

Da diese Anforderungen bereits heutzutage umsetzbar sind, beschreibt diese Patentidee ein disruptives, aber leicht umsetzbares Verfahren zur quantensicheren Schlüsselverteilung in digitalen Netzen - wobei die Verfügbarkeit von verschiedenen Entropieprogrammen und insbesondere deren Kombination die Sicherheit der gesamten Architektur signifikant erhöht.

Unter anderem folgende Sicherheitsbetrachtungen sind in diesem Zusammenhang von besonderer Bedeutung:
a.) Unveränderlichkeit des Entropie-Streams: Der Entropie-Stream muss unveränderlich sein, damit dieselben privaten Anwendungsschlüssel, respektive quantensicheren Schlüssel durch verschiedene Netzelemente an verschiedenen Orten berechnet werden können.
b.) Güte des vorab verteilten Shared Secret (geteiltes Geheimnis): Das vorab verteilte Shared Secret (Pre-shared Secret) muss eine hohe Entropie besitzen und geheim bleiben, da mit seiner Hilfe die Zufallszahlen des Entropie-Streams in geheime Schlüssel übersetzt werden. Jedes lokal Schlüssel berechnende Netzelement sollte einen eindeutigen, geheimen, vorab verteilten Schlüssel besitzen, um die Sicherheit und Eindeutigkeit des Endpunktes zu gewährleisten.
c.) Speicherung der privaten Anwendungsschlüssel: Die lokal erzeugten quantensicheren Schlüssel müssen in gesicherten Umgebungen gehalten werden, um sie vor einem Zugriff durch Dritte zu schützen. Eine Speicherung sollte zum Beispiel im Falle eines Einsatzes im Mobilfunk auf der SIM-Karte eins mobilen Endgerätes, in HLR/VLRs (Home Location Register/Visitor Location Register) erfolgen. Die vorgeschlagene Lösung erfüllt in diesem Zusammenhang auch die Anforderungen an einen Legal Intercept. Sofern etwa nur der Datentransfer im Mobilfunknetz (von Endgerät zu Peering Point ins Internet) gesichert werden soll, kennt der Betreiber den passenden Schlüssel und kann diesen den Legal Intercept Stationen bereitstellen (Legal Intercept, meint die Polizei kann die Sprach- und Datenkommunikation mitschneiden, sofern eine entsprechende richterliche Anordnung existiert).

Eine Erhöhung der Sicherheit der Entropieverteilung lässt sich über die Nutzung disjunkter Netzwerkwege zwischen den Stream-Vervielfältigern erreichen So kann die Übertragung eines Teils der Entropie über einen Netzwerkpfad, ein anderer Teil der Übertragung über einen anderen Netzwerkpfad erfolgen. Die Netzwerkpfade können unterschiedliche Fasernetzwerke, Faser- und Mobilfunknetzwerke, respektive Faser- und Satellitennetzwerke sein. Das heißt, das Verfahren funktioniert auch global. Es obliegt dem sie empfangenden Stream-Vervielfältiger, die verschiedenen Teile des Entropie-Streams wieder korrekt zusammenzusetzen, bevor dieser weiterverarbeitet wird.

Auch ein zeitliches Multiplexing erhöht die Sicherheit, gerade im Falle von (PQ)-verschlüsselten Entropie-Verteilungen. In diesem Fall werden die Teile der Entropie über disjunkte Netze zu unterschiedlichen Zeiten versendet und vom empfangenden Stream-Vervielfältiger wieder korrekt zusammengefügt. Die Möglichkeiten des räumlichen Multiplexings sind nur von der Verfügbarkeit disjunkter Netzwerke begrenzt, während das zeitliche Multiplexing keine Beschränkungen aufweist.

Über die Codierung von Steuerbits, das heißt von Bits die eine Bedeutung für die verwendeten Streaming-Programme und Protokolle haben, lässt sich die Sicherheit des Verfahrens weiter steigern. So könnten spezielle Bits des Entropie-Streams eine Bedeutung für das weitere Vorgehen haben. Beispiel: Diese Steuerbits definieren das zu wählende Berechnungsverfahren (KDF) für die auf der untersten Strukturebene durch Schlüssel gemeinsam nutzende Netzelement lokal erzeugten Schlüssel. Beginnt der Entropiewert mit "00", so könnte dies "Permutation" bedeuten. Beginnt der Entropiewert mit "01", so könnte eine AES Verschlüsselung angewendet werden, um aus dem Entropiewert den Anwendungsschlüssel zu berechnen.

Die Datenrate der Entropiequellen (Entropierate) und die Durchsatzrate der Stream-Vervielfältiger ist generell nicht einheitlich und programmbezogen. Es kann, je nach erforderlicher Schlüsselrate, Programme mit hoher und Programme mit niedriger Datenrate in Bezug auf den Entropie-Stream geben. Mögliche Datenraten sind ein Mal pro Tag für mobile Anwendungen bis hin zu mehreren Mbit/Sekunde für spezielle geschlossene Anwendungen. Die Anwendungen registrieren sich für einen Entropie-Stream, der eine ausreichende Datenrate zur Absicherung der Anwendung liefert. Eine Verschlüsselung von bis zu 64 GB an Daten mit einem Schlüssel über das AES-256 Verfahren wird dabei derzeit als sicher angesehen.

Bei vermischten Entropie-Streams ist zu entscheiden, ob die Datenrate des schnelleren oder des langsamen Entropie-Streams Vorrang hat. Entweder werden Zufallszahlen des schnellen Entropie-Streams gelöscht, respektive nicht weitergeleitet. Oder es werden teilweise originale Zufallszahlen des schnelleren Streams und teilweise XOR multiplizierte oder mittels einer anderen KDF verknüpfte Zufallszahlen zweier Streams an die weiteren Ebenen der Stream-Vervielfältiger weitergeleitet. Für eine höhere Qualität der Zufallszahlen sollte die erste Methode gewählt werden. Die Steuerung der Taktrate nach eindeutigen Zeitsignalen ist essenziell für die Vermischung von Streams unterschiedlicher Entropierate.

Wie grundsätzlich bereits ausgeführt, kommt eine Vielzahl von Anwendungen für die gemäß der vorgeschlagenen Lösung erzeugten quantensicheren Schlüssel in Betracht. Im Folgenden werden einige hiervon nochmals beschrieben.

Zur Absicherung eines Netzwerks wird die verteilte Entropie, sofern sie über PQC-Algorithmen verschlüsselt und authentifiziert gesendet wird, direkt in einen sicheren Schlüsselspeicher, ein Hardware Security Module, zur weiteren Verwendung geschrieben. Alternativ können die Zufallszahlen nach dem Empfang in einem Netzelement zusätzlich verändert werden. Dazu muss ein zusätzlicher, vorverteilter geheimer aber identischer Schlüssel (nicht zu verwechseln mit den Pre-shared Secret) in zwei Netzelementen vorhanden sein. Die Zufallszahlen des Entropie-Streams werden mittels einer mathematischen Operation, zum Beispiel Permutation oder mit beliebigen klassischen Verschlüsselungsverfahren, beispielsweise AES-256, auf geheime Weise verändert und erst dann in einen sicheren Schlüsselspeicher (HSM) geschrieben. Der Vorteil dieses Verfahrens ist eine deutliche Erhöhung der Sicherheit, da zusätzlich zu der PQC-Verschlüsselung noch eine geheime Veränderung der verteilten Entropie erfolgt. Somit lassen sich verteilte private Anwendungsschlüssel zur Verschlüsselung beliebiger Verkehre erzeugen, ohne die eigentlichen Anwendungsschlüssel direkt zuvor über das Internet ausgetauscht zu haben. Dies ist ein deutlicher Unterschied zu etablierten quantenoptischen Schlüsselaustauschmethoden, bei denen der Anwendungsschlüssel potenziell der Gefährdung öffentlicher Netze ausgesetzt wird.

Ferner lässt sich die Kommunikation der Gateway-Routern von Heim- oder Office-Netzwerken absichern. Zwei Router, respektive Gateway-Router und eine netzseitige Gegenstelle teilen sich einen gemeinsamen Zufall über die verteilte Entropie. So können die abgeleiteten Verkehre mit einer quantensicheren Verschlüsselung, unter Anwendung desselben privaten Anwendungsschlüssels, geschützt werden.

Auch mobile Endgeräte lassen sich über ein geschlossenes Programm innerhalb des Mobilfunknetzes mit Entropie versorgen. Dazu wird der OTA/FOTA Kanal verwendet, der seine Gegenstelle an einer Applikation der SIM-Karte hat. Die mobilen Endgeräte können sodann ihre Kommunikation untereinander, mit einer netzseitigen Gegenstelle oder mit einem privaten Serverdienst absichern, sofern dazu vorher vorverteilte, geheime Schlüssel ausgetauscht wurden. Ferner kann die dargestellte Funktion in beliebige Apps auf Mobilfunkgeräten integriert werden, um eine Verschlüsselung auf Anwendungsebene durchzuführen. Die Apps nutzen die Entropie-Dienste, um aus der verteilten Entropie private Anwendungsschlüssel für eine abgesicherte Client-Server-Kommunikation mit ihrem Applikationsserver zu ermöglichen. Kommunikations-Apps (Voice, Video, Chat) nutzen die verteilte Entropie, um eine quantensichere Ende-zu-Ende Verschlüsselung zu realisieren - und stellen dazu ein Interface bereit, um das notwendige "Secret" auszuhandeln, beispielsweise lokal & Peer2Peer über QR Codes, NFC Kommunikation oder Bluetooth Technologie.

Hiervon umfasst sein kann auch die Absicherung von Telematik-Modulen und somit der Kommunikation mit intelligenten Fahrzeugen, bzw. der Kommunikation der Fahrzeuge untereinander. Auch die Kommunikation von Robotern mit der Edge Cloud in einem Campus-Netzwerk kann mit den Entropie-Programmen und vorverteilten, geheimen Schlüsseln abgesichert werden. Die Anwendung der vorgeschlagenen Lösung lässt sich auf die Absicherung der Kommunikation von Logistikketten, Schiffen, Flugzeugen, LKWs und Zügen ausdehnen.

Darüber hinaus lassen sich Anwendungen jenseits explizit der Sicherheit dienender Anwendungen finden. Obwohl der Hauptfokus der Verteilung von Entropie in Sicherheitsanwendungen liegt, existieren im Bereich der Kommunikation noch weitere Anwendungsfelder. Im Bereich der Netzwerkkodierung etwa lässt sich zur Feststellung der Identifikation einer Nachricht, zum Beispiel "Wurde mit der Nachricht ein Alarm gesendet? (ja oder nein)", mit der Anwendung von zuvor an zwei oder mehreren Standorten verteilten identischen Zufallszahlen die zur Identifikation notwendige Datenübertragung signifikant reduzieren. Auf derartige Möglichkeiten der Netzwerkkodierung geht H. Boche and C. Deppe, "Secure identification for wiretap channels; robustness, super-additivity and continuity," IEEE Trans. Inf. Forensics Security, vol. 13, no. 7, pp. 1641-1655, Jul. 2018 ein.

Auch lassen sich über Kodierungen, die auf einem geteilten Zufall basieren, Daten in Mobilfunknetzen sehr sicher, ohne dedizierte Verschlüsselung, übertragen, worauf in M. Wiese, H. Boche, "Semantic Security via Seeded Modular Coding Scheme and Ramanujan Graphs", IEEE TRANSACTIONS ON INFORMATION THEORY, VOL. 67, NO. 1, JANUARY 2021 eingegangen wird. Angriffe auf Mobilfunknetze lassen sich mit entsprechender zufälliger Kodierung der Nachrichten abwehren, siehe dazu H. Boche and C. Deppe, "Secure identification under passive eavesdroppers and active jamming attacks," IEEE Trans. Inf. Forensics Security, vol. 14, no. 2, pp. 472-485, Feb. 2019.

All diese erweiterten Funktionalitäten benötigen einen zuvor sicher ausgetauschten Satz von Zufallszahlen, den die hier beschriebene Lösung in verschiedenen Umfängen, Datenraten beziehungsweise Zugriffsmöglichkeiten (auch global) liefern kann.

Anhand von Zeichnungen werden nachfolgend Ausführungsbeispiele der zuvor hinsichtlich ihrer grundsätzlichen Ausprägung beschriebenen technischen Lösung gegeben, wobei außerdem nochmals auf einige Aspekte diese Lösung etwas näher eingegangen werden soll. In den Zeichnungen zeigen:
- Fig. 1:: eine Ausbildungsform der gemäß der vorgeschlagenen Lösung zur Zufallszahlenverteilung in einem Netzwerk gebildeten hierarchischen Struktur mit einer die Zufallszahlen generierenden Entropiequelle,
- Fig. 2:: eine Ausbildungsform der hierarchischen Struktur zur weltweiten Verteilung durch mehrere Entropiequellen erzeugter Zufallszahlen,
- Fig. 3: die Bildung geschlossener Gruppen innerhalb der hierarchischen Struktur zur Zufallszahlenverteilung unter Nutzung geschlossener Streaming-Programme.

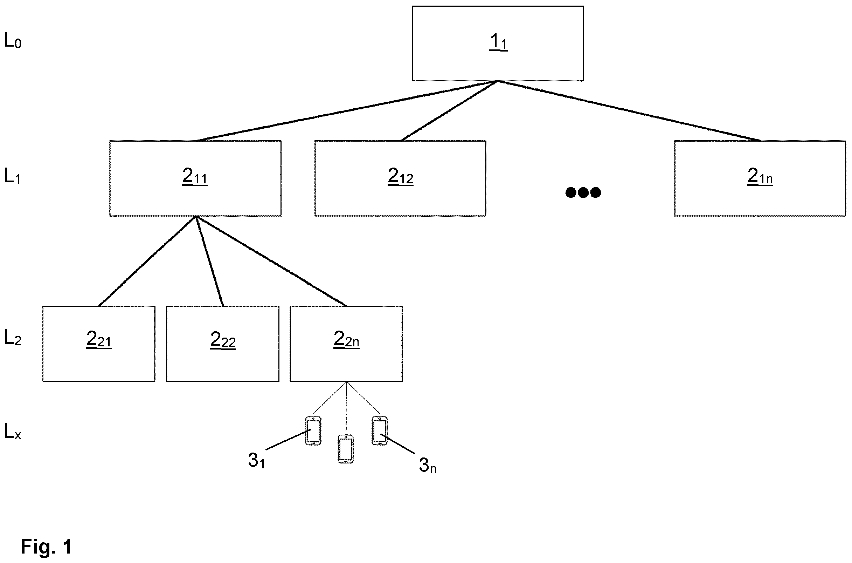

Die Fig. 1 zeigt eine Ausbildungsform der gemäß der vorgeschlagenen Lösung zur Verteilung von Zufallszahlen in einem Netzwerk gebildeten hierarchischen Struktur. Jede, in der obersten Strukturebene L₀ dieser Struktur angeordnete, einen Stream aus Zufallszahlen und zugehörigen Identifikatoren erzeugende Entropiequelle 1₁, 1₂, ... 1ₙ - in dem Beispiel der Fig. 1 ist es nur eine - stellt einen autorisierten Zugang für Stream-Vervielfältiger 2₁₁, 2₁₂, ... 2₁ₙ, 2₂₁, 2₂₂, ... 2ₘₙ auf der nächstniedrigeren Strukturebene (die Struktur umfasst Strukturebenen L₀, L₁, ... Lₓ mit einer obersten Strukturebene L₀ und einer untersten Strukturebene Lₓ) bereit. Über einen (PQ)-autorisierten Zugang (Zugang mit dem Erfordernis einer Authentifizierung unter Anwendung eines festgelegten Verfahrens der Post Quantum Cryptography) wird verhindert, dass die Stream-Vervielfältiger 2₁₁, 2₁₂, ... 2₁ₙ, 2₂₁, 2₂₂, ... 2ₘₙ in ihrer Hauptaufgabe, nämlich der Vervielfachung und Weitergabe von Streams mit Zufallszahlen, behindert werden. Endgeräten, also Netzelemente 3₁, 3₂, ... 3ₙ der untersten Strukturebene Lₓ, welche quantensichere Schlüssel lokal mittels dieser Zufallszahlen erzeugen, kann auch ohne Authentifizierung Zugriff auf die Stream-Vervielfältiger 2₁₁, 2₁₂, ... 2₁ₙ, 2₂₁, 2₂₂, ... 2ₘₙ der der untersten Ebene Lₓ unmittelbar übergeordneten Strukturebene gestattet werden. Er kann aber andererseits, nämlich insbesondere im Zusammenhang mit geschlossenen Streaming-Programmen, an das Erfordernis einer Authentifizierung geknüpft sein.

Die Installation einer Entropiequelle erfolgt in Cloud-Infrastrukturen in unterschiedlichen Availability Zones (das heißt Verfügbarkeitsregionen), um die serverseitige Anwendung hochverfügbar bereitzustellen. Dies umfasst auch eine Betriebsüberwachung. Die Anzahl der bei der Umsetzung der vorgeschlagenen Lösung weltweit einsetzbaren Entropiequellen 1₁, 1₂, ... 1ₙ ist dabei nicht limitiert.

Jede Entropiequelle 1₁, 1₂, ... 1ₙ muss sich über einen DNS (Domain Name Service) Namen und ein zugehöriges PQ-Zertifikat (Post Quantum Cryptography (hybrides) Zertifikat) authentifizieren.

Die geschichtete Architektur erlaubt es, die Verteilung von Zufallszahlen über eine Client-Server Architektur zu skalieren. Die Anzahl der versorgten Nutzer (Netzelemente zur lokalen Erzeugung von quantensicheren Schlüsseln betreibende Nutzer) wird in Abhängigkeit von den Strukturebenen (L₁, L₂, usw. - die Entropiequelle bildet die oberste Strukturebene L₀ aus) und dem Vervielfachungsfaktor (V-Faktor) eines Stream-Vervielfältigers 2₁₁, 2₁₂, ... 2₁ₙ, 2₂₁, 2₂₂, ... 2ₘₙ angegeben.

| Strukturebene | V-Faktor: 100 | V-Faktor: 1000 | V-Faktor: 10.000 |
|---|---|---|---|
| Ebene 1 | 10² | 10³ | 10⁴ |
| Ebene 2 | 10⁴ | 10⁶ | 10⁸ |
| Ebene 3 | 10⁶ | 10⁹ | 10¹² |
| Ebene 4 | 10⁸ | 10¹² | 10¹⁶ |

So kann eine Struktur, welche 4 Strukturebenen mit Stream-Vervielfältigern 2₁₁, 2₁₂, ... 2₁ₙ, 2₂₁, 2₂₂, ... 2ₘₙ umfasst, die jeweils 100 Strukturelemente der nächsten Strukturebene (nämlich Stream-Vervielfältiger 2₁₁, 2₁₂, ... 2₁ₙ, 2₂₁, 2₂₂, ... 2ₘₙ oder, hinsichtlich der letzten Ebene von Vervielfältigern 2₁₁, 2₁₂, ... 2₁ₙ, 2₂₁, 2₂₂, ... 2ₘₙ, Netzelemente 3₁, 3₂, ... 3ₙ zur lokalen Schlüsselerzeugung) aufweist, bereits 100 Millionen Netzelemente der untersten Strukturebene Lₓ mit Entropie, das heißt mit zur Erzeugung quantensicherer Schlüssel geeigneten Zufallszahlen hoher Entropie, versorgen.

Steigt der Vervielfachungsfaktor auf 1.000, so werden 1 Trillion Benutzer erreicht. Eine Architektur mit Vervielfachungsfaktor 10.000 erreicht diesen Wert schon mit drei Ebenen von Stream-Vervielfältigern 2₁₁, 2₁₂, ... 2₁ₙ, 2₂₁, 2₂₂, ... 2ₘₙ.

Ein Stream-Vervielfältiger 2₁₁, 2₁₂, ... 2₁ₙ, 2₂₁, 2₂₂, ... 2ₘₙ mit hohem Vervielfachungsfaktor V-Faktor) lässt sich zum Beispiel über zustandslose Micro-Services hinter mehreren Load Balancern, also einer Netzwerkeinrichtung zur Lastverteilung, hochverfügbar in einem Cloud Operating Center aufbauen. Ein Stream-Vervielfältiger 2₁₁, 2₁₂, ... 2₁ₙ, 2₂₁, 2₂₂, ... 2ₘₙ kann aber auch als Community-Projekt im Internet verteilt werden. Wird die für seine Funktion notwendige Software als Container bereitgestellt, so könnte jeder Internetteilnehmer prinzipiell einen Stream-Vervielfältiger 2₁₁, 2₁₂, ... 2₁ₙ, 2₂₁, 2₂₂, ... 2ₘₙ betreiben. Auf den unteren der Strukturebenen mit Stream-Vervielfältigern 2₁₁, 2₁₂, ... 2₁ₙ, 2₂₁, 2₂₂, ... 2ₘₙ der in dem Netzwerk ausgebildeten hierarchischen Struktur könnten auch P2P (Peer-to-Peer) Architekturen realisiert werden (analog zu Streaming-Konzepten für mediale Inhalte) oder Architekturen im Rahmen von Sicherheitsprojekten (analog TOR oder VPN).

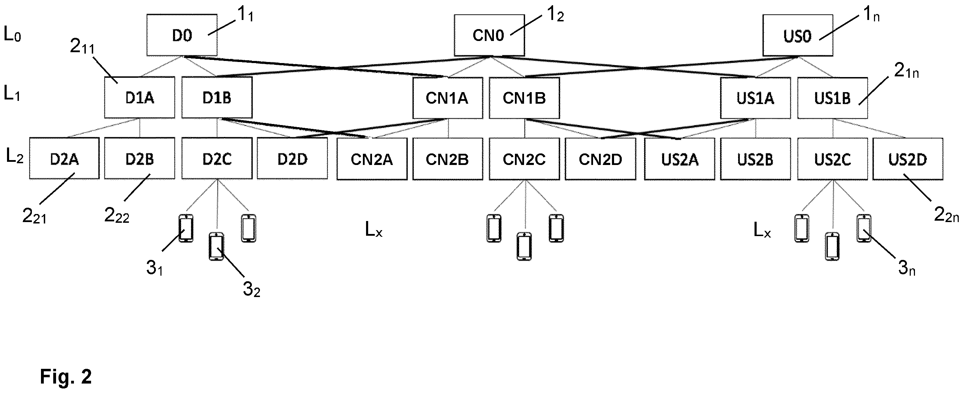

Die Fig. 2 zeigt eine Ausbildungsform der hierarchischen Struktur zur weltweiten, das heißt zur - unter anderem in Bezug auf nationale Netze - netzübergreifenden Verteilung von Zufallszahlen. Die entsprechenden Zufallszahlen, respektive die sie transportierenden Streams werden hierbei von mehreren Entropiequellen 1₁, 1₂, ... 1ₙ auf der obersten Strukturebene der hierarchischen Struktur erzeugt und ausgesendet. Es handelt sich im Beispiel um Entropiequellen 1₁, 1₂, ... 1ₙ des nationalen deutschen und chinesischen Netzes sowie des US-Netzes. Wie aus der Fig. 2 ersichtlich, gibt es unterhalb der obersten Strukturebene der Entropiequellen 1₁, 1₂, ... 1ₙ mehrere Strukturebenen (hier im Beispiel zwei) mit Stream-Vervielfältigern 2₁₁, 2₁₂, ... 2₁ₙ, 2₂₁, 2₂₂, ... 2ₘₙ. Darunter sind einige, bei denen mehrere Streams mit Zufallszahlen, entweder von unterschiedlichen Entropiequellen 1₁, 1₂, ... 1ₙ oder von Stream-Vervielfältigern 2₁₁, 2₁₂, ... 2₁ₙ, 2₂₁, 2₂₂, ... 2ₘₙ der nächsthöheren Strukturebene eingehen. Die Stream-Vervielfältiger 2₁₁, 2₁₂, ... 2₁ₙ, 2₂₁, 2₂₂, ... 2ₘₙ, bei denen mehrere Entropie-Streams eingehen, mischen diese im Zuge ihrer Vervielfachung und Weitergabe an die nächsttiefere Strukturebene durch eine bitweise XOR-Verknüpfung oder unter Anwendung einer anderen KDF miteinander.

Hierbei vollzieht sich dabei beispielsweise folgender möglicher Ablauf:
- Die Entropiequelle 1₁ (D0) erzeugt eine Zufallszahl 0101 und einen genau diese Zufallszahl eindeutig bezeichnenden Identifier 4711 und sendet diese mit einem Stream aus.
- Die Entropiequelle 1₂ (CN0) erzeugt eine Zufallszahl 1110 und einen genau diese Zufallszahl eindeutig bezeichnenden Identifier 0001 und sendet diese mit einem Stream aus.
- Aus den bei ihm eingehenden, vorgenannten Zufallszahlen und Identifiern beider Entropiequellen 1₁, 1₂ berechnet der Stream-Vervielfältiger D1B beispielsweise den Identifier (4711 XOR 0001) und die neue Zufallszahl (0101 XOR 1110) und gibt diese an die Stream-Vervielfältiger der darunterliegenden Strukturebene weiter. Wie bereits mehrfach ausgeführt, handelt es sich bei der bitweisen XOR-Verknüpfung nur um eine, von mehreren hierfür einsetzbaren KDFs.
- Alle den mit den in der vorstehenden Weise miteinander verknüpften Zufallszahlen und Identifier von D1B empfangenden Stream-Vervielfältiger 2₂₁, 2₂₂, ... 2₂ₙ der darunterliegenden Strukturebene geben nun die bitweise multiplizierte Zufallszahl aus der chinesischen und der deutschen Entropiequelle 1₁, 1₂ weiter.

Über die Verknüpfung mehrerer Entropiequellen 1₁, 1₂, ... 1ₙ während der Vervielfältigungsoperationen lassen sich Zufallszahlen erzeugen, die unabhängig von der Entropiequelle 1₁, 1₂, ... 1ₙ und somit unabhängig vom Betreiber der Entropiequelle 1₁, 1₂, ... 1ₙ sind, was folglich die Sicherheit des Gesamtsystems erhöht. Der Grad der Nutzung unterschiedlicher, unabhängiger Entropiequellen 1₁, 1₂, ... 1ₙ könnte daher ein Qualitätsmerkmal einer Entropievervielfachungskette sein.

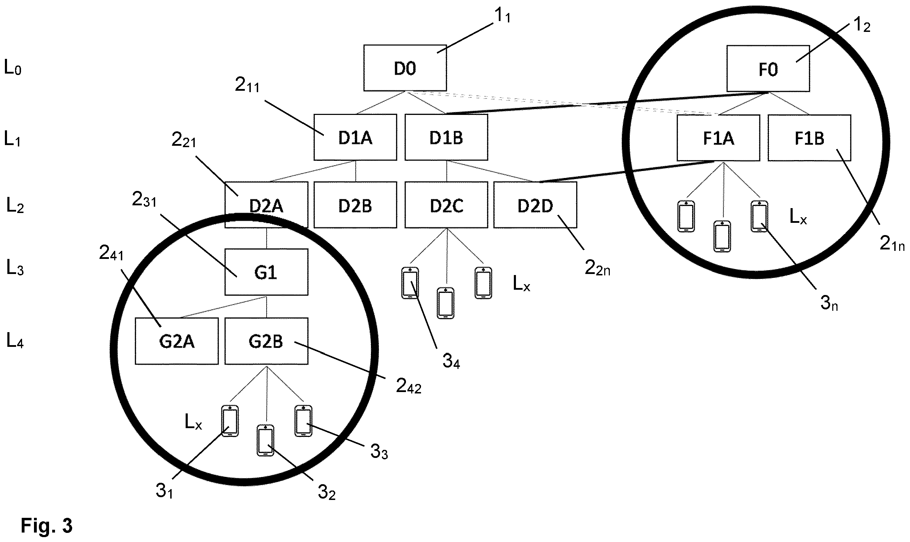

Die Fig. 3 veranschaulicht beispielhaft die Bildung geschlossener Gruppen innerhalb der hierarchischen Struktur unter Nutzung geschlossener Streaming-Programme für die Verteilung von Streams mit Zufallszahlen und Identifikatoren. Bei dem rechts in der Figur mit einem Kreis eingefassten der der hierarchischen Struktur handelt es sich um eine geschlossene Gruppe, welche eine Entropiequelle 1₂ (F0) umfasst und Zufallszahlen für die Schlüsselerzeugung entsprechend einem geschlossenen, auf allen Strukturebenen eine Authentifikation erfordernden Programm verteilt. Eine solche geschlossene Gruppe dient zum Beispiel der Erzeugung quantensicherer Schlüssel für die Feuerwehr und die Polizei.

Auf der linken Seite der Fig. 3 - ebenfalls eingefasst durch einen Kreis - handelt es sich beispielsweise um die geschlossene Nutzergruppe einer Firma, innerhalb welcher verschiedene Standorte des betreffenden Unternehmens quantensichere Schlüssel erzeugen und zur Absicherung der untereinander erfolgenden Kommunikation verwenden. Die betreffende Gruppe, verfügt hierbei jedoch nicht über eine eigene Entropiequelle. Diese Gruppe, welche insoweit auch als abhängige geschlossene Gruppe bezeichnet werden kann, bezieht die Zufallszahlen von der Entropiequelle 1ₙ (D0) eines von ihr als vertrauenswürdig eingestuften institutionellen Anbieters, wie beispielsweise eines Providers.

## Patentansprüche

1. Verfahren zur Nutzung quantensicherer Schlüssel in einem Netzwerk, gemäß welchem mindestens zwei Netzelementen (3₁, 3₂, ... 3ₙ), die selbst nicht über quantenmechanische Mittel verfügen, eine Absicherung zwischen ihnen über das Netzwerk erfolgender Kommunikation mithilfe gemeinsamer quantensicherer Schlüssel ermöglicht wird, wobei die mindestens zwei Netzelemente (3₁, 3₂, ... 3ₙ) einen jeweiligen gemeinsamen quantensicheren Schlüssel jeweils lokal erzeugen aus einer identischen Zufallszahl hoher Entropie, welche sie mit einem aus Zufallszahlen und jeweils eine dieser Zufallszahlen bezeichnenden Identifikatoren bestehenden Entropie-Stream über das Netzwerk beziehen, wobei diese Netzelemente (3₁, 3₂, ... 3ₙ)
a.) den Entropie-Stream empfangen von einem Stream-Vervielfältiger (2₁₁, 2₁₂, ... 2₁ₙ, 2₂₁, 2₂₂, ... 2ₘₙ) einer in dem Netzwerk ausgebildeten hierarchischen Struktur, welche neben diesem Stream-Vervielfältiger (2₁₁, 2₁₂, ... 2₁ₙ, 2₂₁, 2₂₂, ... 2ₘₙ) und den darin eine unterste Strukturebene (Lₓ) ausbildenden Netzelementen (3₁, 3₂, ... 3ₙ) mindestens eine Zufallszahlen hoher Entropie mithilfe quantenmechanischer Mittel generierende Entropiequelle (1₁, 1₂, ... 1ₙ) einer obersten Strukturebene (L₀) umfasst, sowie
b.) den quantensicheren Schlüssel erzeugen, indem sie die Zufallszahl unter Verwendung eines zuvor bei jedem der Netzelemente (3₁, 3₂, ... 3ₙ) als gemeinsames Geheimnis hinterlegten Pre-shared Secret entsprechend einer, das heißt entsprechend derselben durch sie angewendeten Prozessierungsvorschrift verarbeiten.

2. Verfahren nach Anspruch 1, wobei sich zumindest alle oberhalb der untersten Strukturebene (Lₓ) bei der Übertragung von Entropie-Streams aus Zufallszahlen und zugehörigen Identifikatoren miteinander kommunizierenden Einheiten untereinander authentifizieren.

3. Verfahren nach Anspruch 2, wobei sich zur Übertragung von Entropie-Streams untereinander authentifizierende Einheiten mittels eines Signaturverfahrens der PQC, das heißt der Post Quantum Cryptography, oder mithilfe von PQC-Zertifikaten authentifizieren.

4. Verfahren nach einem der Ansprüche 1 bis 3, wobei ein mindestens zwei verschiedene Entropie-Streams mit Zufallszahlen und Identifikatoren von unterschiedlichen Einheiten aus der ihm übergeordneten Strukturebene empfangender Stream-Vervielfältiger (2₁₁, 2₁₂, ... 2₁ₙ, 2₂₁, 2₂₂, ... 2ₘₙ) diese mindestens zwei Entropie-Streams vor ihrer Vervielfältigung und Weiterleitung an die ihm untergeordnete Strukturebene entsprechend einer festgelegten mathematischen Operation miteinander verknüpft.

5. Verfahren nach einem der Ansprüche 1 bis 4, wobei ein erstes Netzelement (3₁, 3₂, ... 3ₙ) und mindestens ein zweites Netzelement (3₁, 3₂, ... 3ₙ), in Abhängigkeit eines für das erste Netzelement (3₁, 3₂, ... 3ₙ) sowie für dieses mindestens eine zweite Netzelement (3₁, 3₂, ... 3ₙ) bestehenden freien oder an eine Authentifizierung gebundenen Zugangs zu mindestens einem Stream-Vervielfältiger (2₁₁, 2₁₂, ... 2₁ₙ, 2₂₁, 2₂₂, ... 2ₘₙ) der hierarchischen Struktur und in Abhängigkeit des Vorliegens mindestens eines gemeinsamen Pre-shared Secret sowohl bei dem ersten Netzelement (3₁, 3₂, ... 3ₙ) als auch bei dem mindestens einen zweiten Netzelement (3₁, 3₂, ... 3ₙ), quantensichere Schlüssel zur Absicherung zwischen ihnen über das Netzwerk erfolgender Kommunikation aus einer Zufallszahl erzeugen, welche das erste Netzelement (3₁, 3₂, ... 3ₙ) sowie das mindestens eine zweite Netzelement (3₁, 3₂, ... 3ₙ) empfangen mit demselben, Zufallszahlen und zugehörige Identifikatoren umfassenden Entropie-Stream, welcher ein Entropie-Stream mindestens einer der nachfolgenden Kategorien ist, nämlich:
- ein reiner Entropie-Stream, das heißt ein Entropie-Stream, der von einer Entropiequelle (1₁, 1₂, ... 1ₙ) der obersten Strukturebene (L₀) generiert und den Netzelementen (3₁, 3₂, ... 3ₙ) unverändert über einen oder über mehrere Stream-Vervielfältiger (2₁₁, 2₁₂, ... 2₁ₙ, 2₂₁, 2₂₂, ... 2ₘₙ) zugeleitet wird,
- ein vermischter Entropie-Stream, das heißt ein Entropie-Stream, welcher den Netzelementen (3₁, 3₂, ... 3ₙ) über einen oder mehrere Stream-Vervielfältiger (2₁₁, 2₁₂, ... 2₁ₙ, 2₂₁, 2₂₂, ... 2ₘₙ) zugeleitet wird und durch eine bei mindestens einem Stream-Vervielfältiger (2₁₁, 2₁₂, ... 2₁ₙ, 2₂₁, 2₂₂, ... 2ₘₙ) erfolgende Verknüpfung mindestens zweier unterschiedlicher, durch eine oder mehrere Entropiequellen (1₁, 1₂, ... 1ₙ) der obersten Strukturebene (L₀) bereitgestellte Entropie-Streams gebildet wird,
- ein geschlossener Entropie-Stream, das heißt ein nur einem geschlossenen, das erste Netzelement (3₁, 3₂, ... 3ₙ) und das mindestens eine zweite Netzelement (3₁, 3₂, ... 3ₙ) umfassenden Kreis von Netzelementen (3₁, 3₂, ... 3ₙ) nach einer erfolgreichen Authentifizierung gegenüber einem Stream-Vervielfältiger (2₁₁, 2₁₂, ... 2₁ₙ, 2₂₁, 2₂₂, ... 2ₘₙ) zugeleiteter Entropie-Stream, welcher durch eine nur diesen geschlossenen Kreis von Netzelementen (3₁, 3₂, ... 3ₙ) oder auch andere Netzelemente (3₁, 3₂, ... 3ₙ) über mindestens einen Stream-Vervielfältiger (2₁₁, 2₁₂, ... 2₁ₙ, 2₂₁, 2₂₂, ... 2ₘₙ) mit Entropie-Streams versorgende Entropiequelle (1₁, 1₂, ... 1ₙ) generiert wird,
- ein offener Entropie-Stream, das heißt ein Entropie-Stream, der für alle auf denselben Stream-Vervielfältiger (2₁₁, 2₁₂, ... 2₁ₙ, 2₂₁, 2₂₂, ... 2ₘₙ) wie das erste Netzelement (3₁, 3₂, ... 3ₙ) zugreifenden Netzelemente (3₁, 3₂, ... 3ₙ) frei zugänglich ist,
- ein weltweit verfügbarer Entropie-Stream, das heißt ein Entropie-Stream der mehreren Netzelementen (3₁, 3₂, ... 3ₙ) an räumlich weltweit verteilten Orten jeweils über einen Stream-Vervielfältiger (2₁₁, 2₁₂, ... 2₁ₙ, 2₂₁, 2₂₂, ... 2ₘₙ) zugänglich ist,
- ein national verfügbarer Entropie-Stream, das heißt ein Entropie-Stream der mehreren Netzelementen (3₁, 3₂, ... 3ₙ) an räumlich verteilten Orten innerhalb eines Landes jeweils über einen Stream-Vervielfältiger (2₁₁, 2₁₂, ... 2₁ₙ, 2₂₁, 2₂₂, ... 2ₘₙ) zugänglich ist,
- ein regional verfügbarer Entropie-Stream, das heißt ein Entropie-Stream der mehreren Netzelementen (3₁, 3₂, ... 3ₙ) einer geographischen Region jeweils über einen Stream-Vervielfältiger (2₁₁, 2₁₂, ... 2₁ₙ, 2₂₁, 2₂₂, ... 2ₘₙ) zugänglich ist.

6. Verfahren nach einem der Ansprüche 1 bis 5, wobei die Entropie der durch die mindestens eine Entropiequelle (1₁, 1₂, ... 1ₙ) erzeugten Zufallszahlen validiert und überwacht wird.

7. Verfahren nach Anspruch 6, wobei die Validierung und Überwachung der Entropie der Zufallszahlen durch mindestens einen die Zufallszahlen unmittelbar von der mindestens einen Entropiequelle (1₁, 1₂, ... 1ₙ) empfangenden Stream-Vervielfältiger (2₁₁, 2₁₂, ... 2₁ₙ, 2₂₁, 2₂₂, ... 2ₘₙ), also durch mindestens einen Stream-Vervielfältiger (2₁₁, 2₁₂, ... 2₁ₙ, 2₂₁, 2₂₂, ... 2ₘₙ) in der Strukturebene unmittelbar unterhalb der obersten Strukturebene (L₀) der mindestens einen Entropiequelle (1₁, 1₂, ... 1ₙ), erfolgt.

8. System zur Nutzung quantensicherer Schlüssel in einem Netzwerk, mit mindestens einer Zufallszahlen, aufgrund des Einsatzes quantenmechanischer Mittel, mit einer hinsichtlich ihrer Zufälligkeit hohen Entropie generierenden Entropiequelle (1₁, 1₂, ... 1ₙ) und mit mindestens zwei, selbst nicht über quantenmechanische Mittel verfügenden Netzelementen (3₁, 3₂, ... 3ₙ), welche dennoch quantensichere Schlüssel zur Absicherung ihrer über das Netzwerk erfolgenden Kommunikation verwenden, wobei
a.) die mindestens zwei Netzelemente (3₁, 3₂, ... 3ₙ) dazu ausgebildet sind Zufallszahlen, welche bei ihnen als ein außerdem Identifikatoren zu den Zufallszahlen umfassender Entropie-Stream über das Netzwerk eingehen, zur lokalen Erzeugung quantensicherer Schlüssel unter Verwendung eines bei den mindestens zwei Netzelementen (3₁, 3₂, ... 3ₙ) als gemeinsames Geheimnis hinterlegten Pre-shared Secret entsprechend einer, das heißt entsprechend derselben durch die mindestens zwei Netzelemente (3₁, 3₂, ... 3ₙ) angewendeten Prozessierungsvorschrift zur Erzeugung quantensicherer Schlüssel zu verarbeiten sowie jeden dabei erhalten Schlüssel in Zuordnung zu dem Identifikator der verwendeten Zufallszahl in einem Sicherheitsmodul zu speichern;
b.) die mindestens eine Entropiequelle (1₁, 1₂, ... 1ₙ) und die mindestens zwei Netzelemente (3₁, 3₂, ... 3ₙ) Teil einer hierarchischen Struktur zur Generierung und Verteilung von Entropie-Streams aus Zufallszahlen hoher Entropie und zugehörigen Identifikatoren sind, wobei die mindestens eine Entropiequelle (1₁, 1₂, ... 1ₙ) Teil einer obersten Strukturebene (L₀) ist oder diese ausbildet und die mindestens zwei Netzelemente (3₁, 3₂, ... 3ₙ) eine unterste Strukturebene (Lₓ) der hierarchischen Struktur ausbilden;
c.) zwischen der obersten Strukturebene (L₀) und der untersten Strukturebene (Lₓ) der hierarchischen Struktur eine oder mehrere weitere Strukturebenen mit jeweils mindestens einem Stream-Vervielfältiger (2₁₁, 2₁₂, ... 2₁ₙ, 2₂₁, 2₂₂, ... 2ₘₙ) ausgebildet sind, über welche den mindestens zwei Netzelementen (3₁, 3₂, ... 3ₙ) der untersten Strukturebene (Lₓ) Entropie-Streams aus Zufallszahlen hoher Entropie und diesen Zufallszahlen zugeordnete Identifikatoren zur Schlüsselerzeugung zugeleitet werden.

9. System nach Anspruch 8, wobei es sich bei der mindestens einen Entropiequelle (1₁, 1₂, ... 1ₙ) um einen Serverdienst handelt, welcher einen Quantum Random Number Generator QRNG oder einen Quantencomputer umfasst.

10. System nach Anspruch 9, wobei der Serverdienst in eine Cloudinfrastruktur eingebettet ist.

11. System nach Anspruch 8 oder 9, wobei die mindestens zwei, quantensichere Schlüssel lokal erzeugenden Netzelemente (3₁, 3₂, ... 3ₙ) dazu ausgebildet sind, sich gegenüber Stream-Vervielfältigern (2₁₁, 2₁₂, ... 2₁ₙ, 2₂₁, 2₂₂, ... 2ₘₙ) der ihnen in der hierarchischen Struktur übergeordneten Strukturebene zu authentifizieren.

12. System nach Anspruch 8 oder 11, wobei es sich bei mindestens einem der mindestens zwei, quantensichere Schlüssel lokal erzeugenden Netzelemente (3₁, 3₂, ... 3ₙ) um ein Telekommunikationsendgerät handelt.

13. System nach Anspruch 12, wobei es sich bei dem mindestens einen Telekommunikationsendgerät um ein mit einem Subscriber Identity Module SIM ausgestattetes Gerät für die mobile Nutzung handelt, wobei dieses Telekommunikationsendgerät und sein SIM dazu ausgebildet sind, mindestens ein für die lokale Erzeugung quantensicherer Zufallszahlen verwendetes Pre-shared Secret in dem SIM abzulegen.

14. System nach Anspruch 8 oder 12, wobei es sich bei mindestens einem der mindestens zwei, quantensichere Schlüssel lokal erzeugenden Netzelemente (3₁, 3₂, ... 3ₙ) um eine Basisstation eines Mobilfunknetzes handelt.

15. System nach Anspruch 8 oder 11, wobei es sich bei den mindestens zwei, quantensichere Schlüssel lokal erzeugenden Netzelementen (3₁, 3₂, ... 3ₙ) um ein Integrated Access Device IAD handelt sowie um einen als Peering Point ausgebildeten Netzwerkknoten, über welchen das IAD und an diesem betriebene Endgeräte unter Ausbildung einer mittels der erzeugten quantensicheren Schlüssel geschützten VPN-Tunnelverbindung an das Netzwerk angekoppelt sind.

## Claims

1. Method for using quantum-secured keys in a network, in which at least two network elements (3₁, 3₂, ... 3ₙ) that do not have their own quantum-mechanical means allow communication that takes place between them over the network to be secured with the aid of common quantum-secured keys, wherein the at least two network elements (3₁, 3₂, ... 3ₙ) each locally generate a respective common quantum-secured key from an identical high-entropy random number that they receive via the network by way of an entropy stream consisting of random numbers and identifiers designating in each case one of these random numbers, wherein these network elements (3₁, 3₂, ... 3ₙ)
a.) receive the entropy stream from a stream multiplier (2₁₁, 2₁₂, ... 2₁ₙ, 2₂₁, 2₂₂, ... 2ₘₙ) of a hierarchical structure formed in the network that comprises, in addition to this stream multiplier (2₁₁, 2₁₂, ... 2₁ₙ, 2₂₁, 2₂₂, ... 2ₘₙ) and the network elements (3₁, 3₂, ... 3ₙ) forming a bottom structural level (Lₓ) therein, at least one entropy source ( 1₁, 1₂, ... 1ₙ), which generates high-entropy random numbers with the aid of quantum-mechanical means, of a top structural level (L₀), and
b.) generate the quantum-secured key by processing the random number using a pre-shared secret stored beforehand at each of the network elements (3₁, 3₂, ... 3ₙ) as a common secret in accordance with a processing rule that they apply, that is to say in accordance with said processing rule.

2. Method according to Claim 1, wherein at least all units communicating with one another above the bottom structural level (Lₓ) during the transmission of entropy streams consisting of random numbers and associated identifiers authenticate one another.

3. Method according to Claim 2, wherein units authenticating one another in order to transmit entropy streams authenticate themselves by way of a PQC signature method, that is to say post quantum cryptography signature method, or with the aid of PQC certificates.

4. Method according to one of Claims 1 to 3, wherein a stream multiplier (2₁₁, 2₁₂, ... 2₁ₙ, 2₂₁, 2₂₂, ... 2ₘₙ) that receives at least two different entropy streams containing random numbers and identifiers from different units from the structural level superordinate thereto links these at least two entropy streams before they are multiplied and forwarded to the structural level subordinate thereto in accordance with a defined mathematical operation.

5. Method according to one of Claims 1 to 4, wherein a first network element (3₁, 3₂, ... 3ₙ) and at least one second network element (3₁, 3₂, ... 3ₙ) generate quantum-secured keys for securing communication that takes place between them over the network from a random number on the basis of existing free access or access linked to an authentication, for the first network element (3₁, 3₂, ... 3ₙ) and for this at least one second network element (3₁, 3₂, ... 3ₙ), to at least one stream multiplier (2₁₁, 2₁₂, ... 2₁ₙ, 2₂₁, 2₂₂, ... 2ₘₙ) of the hierarchical structure and on the basis of the presence of at least one common pre-shared secret both at the first network element (3₁, 3₂, ... 3ₙ) and at the at least one second network element (3₁, 3₂, ... 3ₙ), the first network element (3₁, 3₂, ... 3ₙ) and the at least one second network element (3₁, 3₂, ... 3ₙ) receiving this random number by way of the same entropy stream comprising random numbers and associated identifiers, this entropy stream being an entropy stream from at least one of the following categories, namely:
- a pure entropy stream, that is to say an entropy stream that is generated by an entropy source (1₁, 1₂, ... 1ₙ) of the top structural level (L₀) and is forwarded to the network elements (3₁, 3₂, ... 3ₙ) in unchanged form via one or more stream multipliers (2₁₁, 2₁₂, ... 2₁ₙ, 2₂₁, 2₂₂, ... 2ₘₙ),
- a mixed entropy stream, that is to say an entropy stream that is forwarded to the network elements (3₁, 3₂, ... 3ₙ) via one or more stream multipliers (2₁₁, 2₁₂, ... 2₁ₙ, 2₂₁, 2₂₂, ... 2ₘₙ) and is formed by a link, carried out at at least one stream multiplier (2₁₁, 2₁₂, ... 2₁ₙ, 2₂₁, 2₂₂, ... 2ₘₙ), between at least two different entropy streams provided by one or more entropy sources (1₁, 1₂, ... 1ₙ) of the top structural level (L₀),
- a closed entropy stream, that is to say an entropy stream that is forwarded only to a closed group of network elements (3₁, 3₂, ... 3ₙ) comprising the first network element (3₁, 3₂, ... 3ₙ) and the at least one second network element (3₁, 3₂, ... 3ₙ) following successful authentication with a stream multiplier (2₁₁, 2₁₂, ... 2₁ₙ, 2₂₁, 2₂₂, ... 2ₘₙ) and that is generated by an entropy source (1₁, 1₂, ... 1ₙ) that supplies entropy streams to only this closed group of network elements (3₁, 3₂, ... 3ₙ) or else other network elements (3₁, 3₂, ... 3ₙ) via at least one stream multiplier (2₁₁, 2₁₂, ... 2₁ₙ, 2₂₁, 2₂₂, ... 2ₘₙ),
- an open entropy stream, that is to say an entropy stream that is freely accessible to all network elements (3₁, 3₂, ... 3ₙ) accessing the same stream multiplier (2₁₁, 2₁₂, ... 2₁ₙ, 2₂₁, 2₂₂, ... 2ₘₙ) as the first network element (3₁, 3₂, ... 3ₙ),
- a globally available entropy stream, that is to say an entropy stream that is accessible to multiple network elements (3₁, 3₂, ... 3ₙ) at locations distributed globally in space in each case via a stream multiplier (2₁₁, 2₁₂, ... 2₁ₙ, 2₂₁, 2₂₂, ... 2ₘₙ),
- a nationally available entropy stream, that is to say an entropy stream that is accessible to multiple network elements (3₁, 3₂, ... 3ₙ) at locations distributed within a country in space in each case via a stream multiplier (2₁₁, 2₁₂, ... 2₁ₙ, 2₂₁, 2₂₂, ... 2ₘₙ),
- a regionally available entropy stream, that is to say an entropy stream that is accessible to multiple network elements (3₁, 3₂, ... 3ₙ) in a geographical region in each case via a stream multiplier (2₁₁, 2₁₂, ... 2₁ₙ, 2₂₁, 2₂₂, ... 2ₘₙ) .

6. Method according to one of Claims 1 to 5, wherein the entropy of the random numbers generated by the at least one entropy source (1₁, 1₂, ..., 1ₙ) is validated and monitored.

7. Method according to Claim 6, wherein the entropy of the random numbers is validated and monitored by at least one stream multiplier (2₁₁, 2₁₂, ... 2₁ₙ, 2₂₁, 2₂₂, ... 2ₘₙ) that receives the random numbers directly from the at least one entropy source (1₁, 1₂, ... 1ₙ), that is to say by at least one stream multiplier (2₁₁, 2₁₂, ... 2₁ₙ, 2₂₁, 2₂₂, ... 2ₘₙ) in the structural level directly below the top structural level (L₀) of the at least one entropy source (1₁, 1₂, ... 1ₙ).

8. System for using quantum-secured keys in a network, comprising at least one entropy source (1₁, 1₂, ... 1ₙ) that generates random numbers, based on the use of quantum-mechanical means, that exhibit high entropy with regard to their randomness and comprising at least two network elements (3₁, 3₂, ... 3ₙ) that do not have their own quantum-mechanical means but still use quantum-secured keys to secure their communication that takes place over the network, wherein
a.) the at least two network elements (3₁, 3₂, ... 3ₙ) are designed to process random numbers that reach them over the network as an entropy stream furthermore comprising identifiers in relation to the random numbers in order to locally generate quantum-secured keys using a pre-shared secret stored at the at least two network elements (3₁, 3₂, ... 3ₙ) as a common secret in accordance with a processing rule applied by the at least two network elements (3₁, 3₂, ... 3ₙ), that is to say in accordance with said processing rule, so as to generate quantum-secured keys, and to store each key obtained in the process in association with the identifier of the used random number in a security module;
b.) the at least one entropy source (1₁, 1₂, ... 1ₙ) and the at least two network elements (3₁, 3₂, ... 3ₙ) are part of a hierarchical structure for generating and distributing entropy streams consisting of high-entropy random numbers and associated identifiers, wherein the at least one entropy source (1₁, 1₂, ... 1ₙ) is part of a top structural level (L₀) or forms same and the at least two network elements (3₁, 3₂, ... 3ₙ) form a bottom structural level (Lₓ) of the hierarchical structure;
c.) one or more further structural levels each containing at least one stream multiplier (2₁₁, 2₁₂, ... 2₁ₙ, 2₂₁, 2₂₂, ... 2ₘₙ) are formed between the top structural level (L₀) and the bottom structural level (Lₓ) of the hierarchical structure, using which entropy streams consisting of high-entropy random numbers and identifiers associated with these random numbers are forwarded to the at least two network elements (3₁, 3₂, ... 3ₙ) of the bottom structural level (Lₓ) for key generation purposes.

9. System according to Claim 8, wherein the at least one entropy source (1₁, 1₂, ..., 1ₙ) is a server service that comprises a quantum random number generator QRNG or a quantum computer.

10. System according to Claim 9, wherein the server service is embedded in a cloud infrastructure.

11. System according to Claim 8 or 9, wherein the at least two network elements (3₁, 3₂, ... 3ₙ) locally generating quantum-secured keys are designed to authenticate themselves with stream multipliers (2₁₁, 2₁₂, ... 2₁ₙ, 2₂₁, 2₂₂, ... 2ₘₙ) of the structural level superordinate to them in the hierarchical structure.

12. System according to Claim 8 or 11, wherein at least one of the at least two network elements (3₁, 3₂, ... 3ₙ) locally generating quantum-secured keys is a telecommunications terminal.

13. System according to Claim 12, wherein the at least one telecommunications terminal is a device equipped with a subscriber identity module SIM for mobile use, wherein this telecommunications terminal and its SIM are designed to store at least one pre-shared secret used to locally generate quantum-secured random numbers in the SIM.

14. System according to Claim 8 or 12, wherein at least one of the at least two network elements (3₁, 3₂, ... 3ₙ) locally generating quantum-secured keys is a base station of a mobile radio network.

15. System according to Claim 8 or 11, wherein the at least two network elements (3₂, 3₂, ... 3ₙ) locally generating quantum-secured keys are an integrated access device IAD and a network node designed as a peering point, by way of which the IAD and terminals operated thereon are coupled to the network so as to form a VPN tunnel connection protected by way of the generated quantum-secured keys.

## Revendications

1. Procédé permettant d'exploiter des clés à sécurité quantique dans un réseau, selon lequel entre au moins deux éléments de réseau (3₁, 3₂, ... 3ₙ) ne disposant pas eux-mêmes de moyens mécaniques quantiques, une sécurisation d'une communication ayant lieu entre ceux-ci par le réseau est rendue possible à l'aide de clés à sécurité quantique communes, dans lequel les au moins deux éléments de réseau (3₁, 3₂, ... 3ₙ) génèrent respectivement localement une clé à sécurité quantique commune respective à partir d'un même nombre aléatoire à haute entropie qu'ils obtiennent par le réseau à l'aide d'un flux d'entropie composé de nombres aléatoires et d'identificateurs désignant respectivement l'un desdits nombres aléatoires, dans lequel lesdits éléments de réseau (3₁, 3₂, ... 3ₙ)
a) reçoivent le flux d'entropie d'un multiplicateur de flux (2₁₁, 2₁₂, ... 2₁ₙ, 2₂₁, 2₂₂, ... 2ₘₙ) d'une structure hiérarchique réalisée dans le réseau qui comprend en plus de ce multiplicateur de flux (2₁₁, 2₁₂, ... 2₁ₙ, 2₂₁, 2₂₂, ... 2ₘₙ) et des éléments de réseau (3₁, 3₂, ... 3ₙ) réalisant un niveau de structure inférieur (Lₓ) dans celui-ci, au moins une source d'entropie (1₁, 1₂, ... 1ₙ) générant des nombres aléatoires à haute entropie à l'aide de moyens mécaniques quantiques, d'un niveau de structure supérieur (L₀), et
b) génèrent la clé à sécurité quantique en traitant le nombre aléatoire en utilisant un secret pré-partagé précédemment sauvegardé sur chacun des éléments de réseau (3₁, 3₂, ... 3ₙ) en tant que secret commun, c'est-à-dire selon la même règle de traitement qu'ils appliquent.

2. Procédé selon la revendication 1, dans lequel au moins toutes les unités communiquant entre elles au-dessus du niveau de structure inférieur (Lₓ) s'authentifient entre elles lors du transfert de flux d'entropie composés de nombres aléatoires et d'identificateurs associés.

3. Procédé selon la revendication 2, dans lequel des unités s'authentifiant entre elles pour la transmission de flux d'entropie s'authentifient au moyen d'un procédé de signature de la PQC, c'est-à-dire de la cryptographie post-quantique, ou à l'aide de certificats de PQC.

4. Procédé selon l'une quelconque des revendications 1 à 3, dans lequel un multiplicateur de flux (2₁₁, 2₁₂, ... 2₁ₙ, 2₂₁, 2₂₂, ... 2ₘₙ) recevant au moins deux flux d'entropie différents avec des nombres aléatoires et des identificateurs de différentes unités du niveau de structure supérieur à celui-ci, relie entre eux lesdits au moins deux flux d'entropie avant leur multiplication et retransmission au niveau de structure inférieur à celui-ci selon une opération mathématique définie.

5. Procédé selon l'une quelconque des revendications 1 à 4, dans lequel un premier élément de réseau (3₁, 3₂, ... 3ₙ) et au moins un deuxième élément de réseau (3₁, 3₂, ... 3ₙ), en fonction d'un accès libre ou lié à une authentification existant pour le premier élément de réseau (3₁, 3₂, ... 3ₙ) ainsi que pour ledit au moins un deuxième élément de réseau (3₁, 3₂, ... 3ₙ) à au moins un multiplicateur de flux (2₁₁, 2₁₂, ... 2₁ₙ, 2₂₁, 2₂₂, ... 2ₘₙ) de la structure hiérarchique, et en fonction de la présence d'au moins un secret pré-partagé commun à la fois sur le premier élément de réseau (3₁, 3₂, ... 3ₙ) et sur ledit au moins un deuxième élément de réseau (3₁, 3₂, ... 3ₙ), génèrent des clés à sécurité quantique à partir d'un nombre aléatoire pour sécuriser la communication effectuée entre ceux-ci par le réseau, qui est reçu par le premier élément de réseau (3₁, 3₂, ... 3ₙ) ainsi que par ledit au moins un deuxième élément de réseau (3₁, 3₂, ... 3ₙ) avec le même flux d'entropie comprenant des nombres aléatoires et des identificateurs associés qui est un flux d'entropie d'au moins l'une des catégories suivantes, à savoir :
- un flux d'entropie pur, c'est-à-dire un flux d'entropie qui est généré par une source d'entropie (1₁, 1₂, ... 1ₙ) du niveau de structure supérieur (L₀) et est amené sans changement aux éléments de réseau (3₁, 3₂, ... 3ₙ) par un ou plusieurs multiplicateurs de flux (2₁₁, 2₂₂, ... 2₁ₙ, 2₂₁, 2₂₂, ... 2ₘₙ),
- un flux d'entropie mélangé, c'est-à-dire un flux d'entropie qui est amené aux éléments de réseau (3₁, 3₂, ... 3ₙ) par un ou plusieurs multiplicateurs de flux (2₁₁, 2₁₂, ... 2₁ₙ, 2₂₁, 2₂₂, ... 2ₘₙ) et est formé par une liaison effectuée sur au moins un multiplicateur de flux (2₁₁, 2₁₂, ... 2₁ₙ, 2₂₁, 2₂₂, ... 2ₘₙ) d'au moins deux flux d'entropie différents fournis par une ou plusieurs sources d'entropie (1₁, 1₂, ... 1ₙ) du niveau de structure supérieur (L₀) ,
- un flux d'entropie fermé, c'est-à-dire un flux d'entropie amené uniquement à un cercle fermé d'éléments de réseau (3₁, 3₂, ... 3ₙ) comprenant le premier élément de réseau (3₁, 3₂, ... 3ₙ) et ledit au moins un deuxième élément de réseau (3₁, 3₂, ... 3ₙ), après une authentification réussie vis-à-vis d'un multiplicateur de flux (2₁₁, 2₁₂, ... 2₁ₙ, 2₂₁, 2₂₂, ... 2ₘₙ), qui est généré par une source d'entropie (1₁, 1₂, ... 1ₙ) n'alimentant en flux d'entropie que ce cercle fermé d'éléments de réseau (3₁, 3₂, ... 3ₙ) ou bien aussi d'autres éléments de réseau (3₁, 3₂, ... 3ₙ) par au moins un multiplicateur de flux (2₁₁, 2₁₂, ... 2₁ₙ, 2₂₁, 2₂₂, ... 2ₘₙ),
- un flux d'entropie ouvert, c'est-à-dire un flux d'entropie qui est librement accessible à tous les éléments de réseau (3₁, 3₂, ... 3ₙ) accédant au même multiplicateur de flux (2₁₁, 2₁₂, ... 2₁ₙ, 2₂₁, 2₂₂, ... 2ₘₙ) que le premier élément de réseau (3₁, 3₂, ... 3ₙ),
- un flux d'entropie disponible au niveau mondial, c'est-à-dire un flux d'entropie qui est accessible à plusieurs éléments de réseau (3₁, 3₂, ... 3ₙ) à des endroits répartis physiquement dans le monde, respectivement par un multiplicateur de flux (2₁₁, 2₁₂, ... 2₁ₙ, 2₂₁, 2₂₂, ... 2ₘₙ),
- un flux d'entropie disponible au niveau national, c'est-à-dire un flux d'entropie qui est accessible à plusieurs éléments de réseau (3₁, 3₂, ... 3ₙ) à des endroits répartis physiquement à l'intérieur d'un pays, respectivement par un multiplicateur de flux (2₁₁, 2₂₂, ... 2₁ₙ, 2₂₁, 2₂₂, ... 2ₘₙ),
- un flux d'entropie disponible au niveau régional, c'est-à-dire un flux d'entropie qui est accessible à plusieurs éléments de réseau (3₁, 3₂, ... 3ₙ) d'une région géographique, respectivement par un multiplicateur de flux (2₁₁, 2₁₂, ... 2₁ₙ, 2₂₁, 2₂₂, ... 2ₘₙ) .

6. Procédé selon l'une quelconque des revendications 1 à 5, dans lequel l'entropie des nombres aléatoires générés par ladite au moins une source d'entropie (1₁, 1₂, ... 1ₙ) est validée et surveillée.

7. Procédé selon la revendication 6, dans lequel la validation et la surveillance de l'entropie des nombres aléatoires sont effectuées par au moins un multiplicateur de flux (2₁₁, 2₁₂, ... 2₁ₙ, 2₂₁, 2₂₂, ... 2ₘₙ), recevant les nombres aléatoires directement de ladite au moins une source d'entropie (1₁, 1₂, ... 1ₙ), donc par au moins un multiplicateur de flux (2₁₁, 2₁₂, ... 2₁ₙ, 2₂₁, 2₂₂, ... 2ₘₙ) dans le niveau de structure directement au-dessous du niveau de structure supérieur (L₀) de ladite au moins une source d'entropie (1₁, 1₂, ... 1ₙ) .

8. Système permettant d'exploiter des clés à sécurité quantique dans un réseau, comprenant au moins une source d'entropie (1₁, 1₂, ... 1ₙ) générant des nombres aléatoires par la mise en œuvre de moyens mécaniques quantiques et ayant une haute entropie concernant leur caractère aléatoire, et comprenant au moins deux éléments de réseau (3₁, 3₂, ... 3ₙ) ne disposant pas eux-mêmes de moyens mécaniques quantiques qui utilisent malgré tout des clés à sécurité quantique pour sécuriser leur communication passant par le réseau, dans lequel
a) les au moins deux éléments de réseau (3₁, 3₂, ... 3ₙ) sont réalisés pour traiter des nombres aléatoires qui arrivent chez eux par le réseau sous la forme d'un flux d'entropie comprenant en outre des identificateurs pour les nombres aléatoires, pour la génération locale de clés à sécurité quantique en utilisant un secret pré-partagé sauvegardé sous forme de secret commun sur les au moins deux éléments de réseau (3₁, 3₂, ... 3ₙ), selon une règle de traitement, c'est-à-dire selon la même règle de traitement appliquée par les au moins deux éléments de réseau (3₁, 3₂, ... 3ₙ) pour générer des clés à sécurité quantique, et pour stocker dans un module de sécurité chaque clé alors obtenue en association avec l'identificateur du nombre aléatoire utilisé ;
b) ladite au moins une source d'entropie (1₁, 1₂, ... 1ₙ) et les au moins deux éléments de réseau (3₁, 3₂, ... 3ₙ) font partie d'une structure hiérarchique pour générer et distribuer des flux d'entropie composés de nombres aléatoires à haute entropie et d'identificateurs associés, dans lequel ladite au moins une source d'entropie (1₁, 1₂, ... 1ₙ) fait partie d'un niveau de structure supérieur (L₀) ou réalise celui-ci et les au moins deux éléments de réseau (3₁, 3₂, ... 3ₙ) réalisent un niveau de structure inférieur (Lₓ) de la structure hiérarchique ;
c) entre le niveau de structure supérieur (L₀) et le niveau de structure inférieur (Lₓ) de la structure hiérarchique, un ou plusieurs niveaux de structure supplémentaires avec respectivement au moins un multiplicateur de flux (2₁₁, 2₁₂, ... 2₁ₙ, 2₂₁, 2₂₂, ... 2ₘₙ) sont réalisés, par lesquels des flux d'entropie composés de nombres aléatoires à haute entropie et d'identificateurs associés auxdits nombres aléatoires sont amenés auxdits au moins deux éléments de réseau (3₁, 3₂, ... 3ₙ) du niveau de structure inférieur (Lₓ) pour la génération de clés.

9. Système selon la revendication 8, dans lequel ladite au moins une source d'entropie (1₁, 1₂, ... 1ₙ) est un service de serveur qui comprend un générateur de nombres aléatoires quantiques, QRNG, ou un ordinateur quantique.

10. Système selon la revendication 9, dans lequel le service de serveur est incorporé dans une infrastructure cloud.

11. Système selon la revendication 8 ou 9, dans lequel les au moins deux éléments de réseau (3₁, 3₂, ... 3ₙ) générant localement des clés à sécurité quantique sont réalisés pour s'authentifier vis-à-vis des multiplicateurs de flux (2₁₁, 2₁₂, ... 2₁ₙ, 2₂₁, 2₂₂, ... 2ₘₙ) du niveau de structure supérieur à ceux-ci dans la structure hiérarchique.

12. Système selon la revendication 8 ou 11, dans lequel au moins l'un des au moins deux éléments de réseau (3₁, 3₂, ... 3ₙ) générant localement des clés à sécurité quantique est un terminal de télécommunication.

13. Système selon la revendication 12, dans lequel le terminal de télécommunication est un appareil équipé d'un module d'identité de l'abonné, SIM, pour un usage mobile, dans lequel ledit terminal de télécommunication et son SIM sont réalisés pour sauvegarder dans le SIM au moins un secret pré-partagé utilisé pour la génération locale de nombres aléatoires à sécurité quantique.

14. Système selon la revendication 8 ou 12, dans lequel au moins l'un des au moins deux éléments de réseau (3₁, 3₂, ... 3ₙ) générant localement des clés à sécurité quantique est une station de base d'un réseau radio mobile.

15. Système selon la revendication 8 ou 11, dans lequel les éléments de réseau (3₁, 3₂, ... 3ₙ) générant localement au moins deux clés à sécurité quantique sont un dispositif d'accès intégré, IAD, ainsi qu'un noeud de réseau réalisé sous forme de point de peering par lequel l'IAD et les terminaux fonctionnant au niveau de celui-ci sont couplés au réseau en réalisant une liaison de tunnel VPN protégée au moyen des clés à sécurité quantique générées.
